# EUROPEAN PATENT APPLICATION

(11) **EP 4 417 885 A1**
(43) Date of publication of application: **21.08.2024**
(21) Application number: 22880578.4
(22) Date of filing: 15.06.2022
(51) Int. Cl.: F24F 7/007

(54) **VENTILATION CONTROL SYSTEM**

(30) Priority: 12.10.2021 WO PCT/JP2021/037680
(71) Applicant: MITSUBISHI ELECTRIC CORPORATION, Chiyoda-ku Tokyo 100-8310 (JP)
(72) Inventor: KOMAE, Sota, Tokyo 100-8310 (JP); NAGATA, Fukutaro, Tokyo 100-8310 (JP); NAMATAME, Shogo, Tokyo 100-8310 (JP); YANO, Hirotoshi, Tokyo 100-8310 (JP)
(74) Representative: Witte, Weller & Partner Patentanwälte mbB
(86) International application number: PCT/JP2022/023911
(87) International publication number: WO 2023/062872

(57) **Abstract**

It is an object to provide a ventilation control system that allows ventilation achieving energy saving while enhancing the comfort of a user in a room as compared with conventional ones. The ventilation control system includes ventilation equipment and an information processing device. The ventilation equipment can switch between a function to perform heat exchange ventilation by passing supply air and exhaust air inside a building through a heat exchange unit, and a function to perform non-heat exchange ventilation in which at least part of at least one of the supply air and the exhaust air is not passed through the heat exchange unit. The information processing device includes an information acquisition unit, an operation selection unit, and a setting unit. The information acquisition unit acquires control determination information including at least one of climate type determination information for determining the type of climate at the installation position of the ventilation equipment, outside air temperature information on the building, and operation information indicating the operating state of a heating and cooling apparatus in the building. The operation selection unit selects, using the control determination information, one of a first setting to cause the ventilation equipment to perform the heat exchange ventilation, and a second setting to cause the ventilation equipment to perform the non-heat exchange ventilation.

## Description

### Field

The present disclosure relates to a ventilation control system that controls ventilation in a room in which a heating and cooling apparatus is installed.

### Background

Ventilators are installed in environments where persons live such as houses and offices from the viewpoint of preventing degradation of air environments associated with a decrease in oxygen concentration due to confined air, odors, and increases in gas components such as volatile organic compounds (VOCs). It is known that a decrease in oxygen concentration and increases in gas components are improved with an increase in the amount of outside air supply by ventilation. In Japan, the minimum required amounts of ventilation depending on the sizes and capacities of buildings are defined by law etc. On the other hand, when the amount of ventilation is increased, the temperature and humidity environment in the room becomes closer to the outside air, bringing the interior of the room closer to an unpleasant environment mainly in winter and summer. That is, there is a problem that simply increasing the amount of ventilation increases the load of air-conditioning equipment installed to maintain a comfortable indoor environment. To solve this problem, Patent Literature 1 proposes a ventilator that takes energy saving performance into consideration, including a heat exchange function to keep the indoor temperature and a function to change the operations of an air supply fan and an air exhaust fan according to the outdoor temperature and humidity. In the ventilator described in Patent Literature 1, a season is determined by comparing indoor and outdoor temperatures measured by sensors held by the ventilator itself with temperature conditions set in advance for summer, winter, and the intermediate season, and the ventilator is operated in an operation mode according to the season.

### Citation List

### Patent Literature

Patent Literature 1: Japanese Patent Application Laid-open No. 2015-190687

### Summary

### Technical Problem

However, the above conventional technique considers only a season determined from indoor and outdoor temperatures measured by the ventilator itself, and does not consider actual living conditions or bodily sensation of a user. That is, uniform ventilation operation of the ventilator according to the conventional technique depending on a season causes cases where the setting of the indoor temperature environment by the user is not reflected. In one example, even if the indoor temperature environment is comfortable, when the user returns home from the hot outside in summer, the user may temporarily turn on the air conditioner to lower the indoor temperature, or in the cold winter season, the user may set the interior of the room slightly warmer. In these cases, in the above conventional technique, the ventilator operates such that the interior of the room is under a preset temperature condition, according to a season determined from the indoor and outdoor temperatures measured. This cannot provide an indoor environment according to setting performed by the user on the heating and cooling apparatus, impairing the comfort of the user. Furthermore, when the heating and cooling apparatus lowers or raises the indoor temperature from a comfortable indoor temperature environment, the ventilator may unnecessarily increase the amount of ventilation to provide a comfortable indoor temperature environment, causing an unnecessary energy loss. Moreover, also in the intermediate season such as spring and fall other than summer and winter, the ventilator may likewise make the user feel uncomfortable, and cause an unnecessary energy loss.

The present disclosure has been made in view of the above. It is an object of the present disclosure to provide a ventilation control system that allows ventilation achieving energy saving while enhancing the comfort of a user in a room as compared with conventional ones.

### Solution to Problem

To solve the above-described problem and achieve the object, a ventilation control system of the present disclosure includes ventilation equipment and an information processing device that controls the operation of the ventilation equipment. The ventilation equipment includes a heat exchange unit, and can switch between a function to perform heat exchange ventilation in which supply air and exhaust air inside a building are passed through the heat exchange unit so that heat is exchanged between the supply air and the exhaust air, and a function to perform non-heat exchange ventilation in which at least part of at least one of the supply air and the exhaust air is not passed through the heat exchange unit, to adjust states of the supply air and the exhaust air individually. The information processing device includes an information acquisition unit, an operation selection unit, and a setting unit. The information acquisition unit acquires control determination information including at least one piece of information selected from climate type determination information that is information for determining the type of climate at the installation position of the ventilation equipment, outside air temperature information indicating the air temperature outside the building, and operation information indicating the operating state of a heating and cooling apparatus that can perform at least one of heating and cooling inside the building. The operation selection unit selects, using the control determination information, one of a first setting to operate the ventilation equipment to perform the heat exchange ventilation, and a second setting to operate the ventilation equipment to perform the non-heat exchange ventilation. The setting unit operates the ventilation equipment in accordance with the setting selected by the operation selection unit. The ventilation equipment includes a control unit that adjusts the states of the supply air and the exhaust air according to the setting.

### Advantageous Effects of Invention

The ventilation control system according to the present disclosure has the effect of allowing ventilation achieving energy saving while enhancing the comfort of a user in a room as compared with conventional ones.

### Brief Description of Drawings

FIG. 1 is a block diagram illustrating an example of a configuration of a ventilation control system according to a first embodiment.
FIG. 2 is a block diagram illustrating an example of a configuration of an operating terminal.
FIG. 3 is a top opened-up view schematically illustrating an example of an internal configuration of ventilation equipment used in the ventilation control system according to the first embodiment.
FIG. 4 is a side opened-up view schematically illustrating the example of the internal configuration of the ventilation equipment used in the ventilation control system according to the first embodiment.
FIG. 5 is a side opened-up view schematically illustrating the example of the internal configuration of the ventilation equipment used in the ventilation control system according to the first embodiment.
FIG. 6 is a block diagram illustrating an example of a functional configuration of an information processing device used in the ventilation control system according to the first embodiment.
FIG. 7 is a flowchart illustrating an example of a procedure of a ventilation mode switching control method in the ventilation control system according to the first embodiment.
FIG. 8 is a block diagram schematically illustrating an example of a configuration of a ventilation control system according to a second embodiment.
FIG. 9 is a flowchart illustrating an example of a procedure of a ventilation mode switching control method in the ventilation control system according to the second embodiment.
FIG. 10 is a block diagram schematically illustrating an example of a configuration of a ventilation control system according to a third embodiment.
FIG. 11 is a flowchart illustrating an example of a procedure of a ventilation mode switching control method in the ventilation control system according to the third embodiment.
FIG. 12 is a flowchart illustrating an example of a procedure of a summer operation determination process in FIG. 11.
FIG. 13 is a flowchart illustrating an example of a procedure of a winter operation determination process in FIG. 11.
FIG. 14 is a diagram illustrating an example of a hardware configuration of a computer system that implements the information processing device of the ventilation control system according to the first to third embodiments.

### Description of Embodiments

Hereinafter, a ventilation control system according to embodiments of the present disclosure will be described in detail with reference to the drawings.

### First Embodiment.

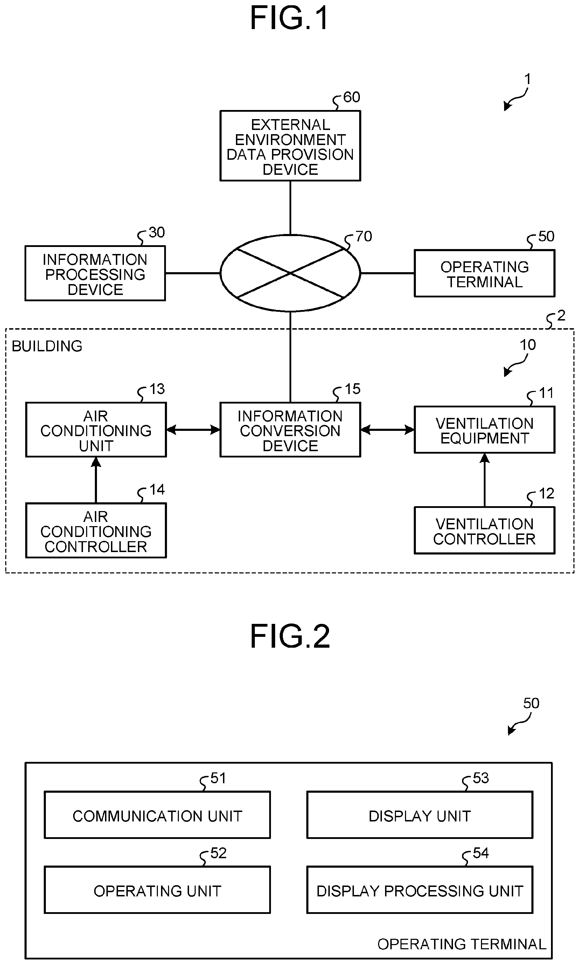

FIG. 1 is a block diagram illustrating an example of a configuration of a ventilation control system according to a first embodiment. A ventilation control system 1 includes a ventilation system 10 provided inside a building 2, an information processing device 30, an operating terminal 50, and an external environment data provision device 60. An example of the building 2 is a house, an apartment building, an office building, etc. The ventilation system 10, the information processing device 30, the operating terminal 50, and the external environment data provision device 60 are connected via a network 70. The network 70 is, for example, the Internet. Although not illustrated, another server may be connected to the network 70.

The ventilation system 10 is provided in the building 2. Here, the ventilation system 10 includes ventilation equipment 11, a ventilation controller 12, an air conditioning unit 13, an air conditioning controller 14, and an information conversion device 15. Although FIG. 1 illustrates a case where the ventilation equipment 11, the ventilation controller 12, the air conditioning unit 13, the air conditioning controller 14, and the information conversion device 15 are provided inside the building 2, the information conversion device 15 may not be provided inside the building 2.

The ventilation equipment 11 is provided in the building 2 and includes a function to exhaust air in the interior of the building 2 to the outside and supply outside air to the interior. Here, the interior of the building 2 is a room, and the ventilation equipment 11 ventilates the interior of the room, that is, the indoors. The ventilation equipment 11 is an apparatus that includes a heat exchange unit to be described later, and can operate switching between heat exchange ventilation in which heat is exchanged between supply air and exhaust air and non-heat exchange ventilation in which heat exchange is not performed. The ventilation equipment 11 includes a communication function and can communicate with the information processing device 30 and the operating terminal 50 via the information conversion device 15. The ventilation equipment 11 is connected to the information conversion device 15 by wire or radio. Although FIG. 1 illustrates a case where the ventilation system 10 includes one piece of ventilation equipment 11, the ventilation system 10 may include a plurality of pieces of ventilation equipment 11.

The ventilation controller 12 performs setting on the ventilation equipment 11 according to an operation by a user. The ventilation controller 12 is connected to the ventilation equipment 11 by radio or wire, and performs setting on the ventilation equipment 11 according to an operation by the user. The ventilation equipment 11 can be operated individually by the ventilation controller 12. The user is a person who uses the ventilation system 10 to set the temperature and humidity environment inside the building 2 in accordance with the living environment or bodily sensation. Here, a case where the user is, for example, in a room in which the ventilation equipment 11 and the air conditioning unit 13 are provided inside the building 2 will be described as an example.

The air conditioning unit 13 is a device provided inside the building 2 to perform indoor air conditioning, and is an example of a heating and cooling apparatus. The air conditioning unit 13 is provided in the room to be ventilated by the ventilation equipment 11. An example of the air conditioning unit 13 is an air conditioner including a heating and cooling function to achieve at least one of a heating function and a cooling function, and a dehumidification function. The air conditioner here is a device that includes functions to heat and cool and dehumidify indoor air, and typically does not include a function to introduce outside air. The air conditioning unit 13 is not limited to an air conditioner, and may be any device that changes conditions of air including at least one of the temperature, humidity, and concentration of air, such as an air handling unit, a humidifier, or a dehumidifier. In the first embodiment, the air conditioning unit 13 includes a communication function and can communicate with the information processing device 30 and the operating terminal 50 via the information conversion device 15. The air conditioning unit 13 is connected to the information conversion device 15 by wire or radio. That is, in the first embodiment, the air conditioning unit 13 is an example of a heating and cooling apparatus having a communication function. Here, the air conditioning unit 13 is illustrated as the heating and cooling apparatus, but the heating and cooling apparatus may be any apparatus that can adjust the indoor temperature by performing at least one of heating and cooling, and includes a communication function, such as a stove (i.e. heater) or floor heating.

The air conditioning unit 13 includes an information transmission function to transmit operation information including the energization state of the air conditioning unit 13, the operating state of the heating and cooling function, etc. to the information processing device 30. The information transmission function may transmit setting information including part of operations performed by the air conditioning controller 14. The energization state of the air conditioning unit 13 indicates whether the air conditioning unit 13 is powered on or off. The operating state of the heating and cooling function indicates whether the heating and cooling function is on or off. In one example, the operating state of the heating and cooling function indicates whether the current operation of the air conditioning unit 13 is heating and cooling operation or dehumidification operation. In addition to these, if it is possible to sense indoor condition information such as air environment conditions in the room that is a place where the air conditioning unit 13 is installed, the presence or absence of a person in the room, information on the number of people in the room, a cooling set temperature or a heating set temperature of the air conditioning unit 13, noise conditions, and/or the operating state of another home appliance, the information transmission function may transmit the indoor condition information to the information processing device 30. Examples of the air environment conditions include the temperature and humidity, and the concentrations of particulate matter (PM) 2.5, mold, pollen, odor, etc. Although FIG. 1 illustrates a case where the ventilation system 10 includes one air conditioning unit 13, the ventilation system 10 may include a plurality of air conditioning units 13.

The air conditioning controller 14 performs setting on the air conditioning unit 13 according to an operation by the user. The air conditioning controller 14 is connected to the air conditioning unit 13 by radio or wire, and performs setting on the air conditioning unit 13 according to an operation by the user. The air conditioning unit 13 can be operated individually by the air conditioning controller 14.

The information conversion device 15 is a device that performs communication between the ventilation equipment 11 and the air conditioning unit 13 in the ventilation system 10, and the information processing device 30 and the operating terminal 50 via the network 70. The information conversion device 15 communicates with the information processing device 30 or the operating terminal 50 according to a preset protocol, and communicates with the ventilation equipment 11 or the air conditioning unit 13 according to a predetermined protocol.

When the building 2 is a house, the air conditioning unit 13 is often installed in each room such as a living room, a bedroom, and a children's room. Sending signals from the air conditioning units 13 by wire may reduce the ease of construction. Transmitting information by radio is thus advantageous in terms of ease of construction. In this case, as the information conversion device 15, a Wireless Fidelity (registered trademark, Wi-Fi) router is used. That is, a wireless local area network (LAN) is configured in which the information conversion device 15 is an access point, and the ventilation equipment 11 and the air conditioning units 13 are slaves.

When the building 2 is divided into a plurality of floors, one Wi-Fi router may not be able to cover all the floors of the building 2 as its wireless communication range. In this case, a relay terminal may be prepared, or a plurality of Wi-Fi routers may be prepared. When a relay terminal is prepared, the Wi-Fi router and the relay terminal constitute the information conversion device 15. When a plurality of Wi-Fi routers are prepared, the ventilation system 10 includes a plurality of information conversion devices 15.

The information processing device 30 controls the ventilation equipment 11 in accordance with the home environment of the user in the room or the actual state of use of the heating and cooling apparatus. The home environment of the user is, for example, the type of climate, the outside air temperature, etc. The actual state of use of the heating and cooling apparatus by the user is whether the air conditioning unit 13 is connected or the operating state of the air conditioning unit 13. The home environment of the user or the actual state of use of the heating and cooling apparatus by the user can be obtained using information obtained from the air conditioning unit 13, the operating terminal 50, or the external environment data provision device 60. The type of climate is a season determined based on the outside air temperature at the installation position of the ventilation equipment 11, and is obtained by changing the period of the season defined by the calendar according to the installation position of the ventilation equipment 11. Seasons defined by the calendar are spring, summer, autumn, and winter. Their commencements and terminations are the same throughout Japan. The type of climate in this description is obtained by, for example, determining the commencements and terminations of spring, summer, autumn, and winter, based on annual outside air temperatures at the installation position of the ventilation equipment 11, and may be different from a season defined by the calendar, and may vary from region to region.

Specifically, in accordance with at least one piece of information of the type of climate and the outside air temperature at the installation position of the ventilation equipment 11, and the operating state of the air conditioning unit 13, the information processing device 30 selects one of a first setting to operate the ventilation equipment 11 to perform heat exchange ventilation and a second setting to operate the ventilation equipment 11 to perform non-heat exchange ventilation, that is, one of two settings for different supply air and exhaust air states. Here, the first setting is a setting to operate the ventilation equipment 11 so that supply air and exhaust air are in a first state, and the second setting is a setting to operate the ventilation equipment 11 so that supply air and exhaust air are in a second state different from the first state. In one example, the first setting is equal to the second setting in operation for either supply air or exhaust air, and the supply air or the exhaust air that is not equally set in the first setting and the second setting is less than the supply air or the exhaust air that is equally set, and the supply air or the exhaust air that is not equally set is less in the second setting than in the first setting. In another setting example, the first setting is a setting to perform heat exchange ventilation, and the second setting is a setting to perform non-heat exchange ventilation on at least part of at least one of supply air and exhaust air. The information processing device 30 transmits the selected setting to the ventilation equipment 11 via the network 70, to operate the ventilation equipment 11 according to the selected setting. The information processing device 30 is, for example, a cloud server or an on-premises server.

The operating terminal 50 is a device that can operate the ventilation system 10 via the network 70. FIG. 2 is a block diagram illustrating an example of a configuration of the operating terminal. The operating terminal 50 includes a communication unit 51, an operating unit 52, a display unit 53, and a display processing unit 54. The communication unit 51 transmits and receives information to and from the ventilation equipment 11, the air conditioning unit 13, or the information processing device 30 via the network 70. The operating unit 52 performs setting operations on the ventilation equipment 11, the air conditioning unit 13, and the information processing device 30. An example of the operating unit 52 is an input unit such as a keyboard, buttons, etc. The operating unit 52 may be a touch panel integrated with the display unit 53. The display unit 53 is a device that visually displays information, such as a liquid crystal display device. The display processing unit 54 performs processing to display information from the information processing device 30, the ventilation equipment 11, etc. on the display unit 53. An example of the operating terminal 50 is a smartphone, a tablet terminal, etc., which is installed with an application for operating the ventilation control system 1 to be able to transmit and receive information to and from the information processing device 30. Although FIG. 1 illustrates a case where the operating terminal 50 is present outside the building 2, the operating terminal 50 is not necessarily limited to being installed outside the building 2, and may be present inside the building 2. That is, the operating terminal 50 may be any device having a form that can be taken outside. Note that the operating terminal 50 is not limited to specifications to install the application for operation, and may be a dedicated terminal for transmission and reception to and from the information processing device 30.

An embodiment including the application for operation has the advantage of eliminating factors that limit the operating terminal 50 itself. In addition, there is also an advantage that the function of the operating terminal 50 can be provided to a plurality of devices to allow a plurality of persons to perform operations at the same time. However, there may occur the trouble of setting for performing transmission and reception to and from the information processing device 30, apparatus registration of the operating terminal 50 itself or the ventilation equipment 11 and the air conditioning unit 13 for control, etc., complicating operations in this case. If it is desired to prevent the occurrence of this trouble, the operating terminal 50 dedicated to accessing the information processing device 30 may be prepared. Alternatively, the ventilation controller 12 or the air conditioning controller 14 may also include the function of the operating terminal 50. Conversely, the operating terminal 50 may redundantly include the function of the ventilation controller 12 or the air conditioning controller 14. In this way, operations can be simplified.

In any case, it is desirable to include a plurality of means for operating the ventilation equipment 11 and the air conditioning unit 13. If the operating terminal 50 serves as both of the ventilation controller 12 and the air conditioning controller 14, it is desirable that the ventilation equipment 11 itself and the air conditioning unit 13 itself include at least an on/off function to allow switching operation on and off. The information processing device 30, which is not limited in its form, at least operates electrically. Consequently, there may be a case where only the information processing device 30 cannot operate alone. In this case, operations using the operating terminal 50 cannot be performed, and operations on the ventilation equipment 11 and the air conditioning unit 13 via the information processing device 30 cannot be performed. As a result, when problems such as excessive temperature adjustment that causes discomfort, discomfort such as a feeling of suffocation due to insufficient ventilation, and energy consumption due to unnecessary operation occur, the ventilation equipment 11 or the air conditioning unit 13 cannot be stopped. Therefore, when the ventilation equipment 11 and the air conditioning unit 13 individually include the on/off function, operations at the ventilation equipment 11 and the air conditioning unit 13 can be stopped, and a problem that has occurred as described above can be solved.

The external environment data provision device 60 is, for example, a device that provides external environment data including outside air temperature information indicating the outside air temperatures of regions. Here, the outside air temperature information is information indicating the air temperature outside the building 2 in which the ventilation equipment 11 is installed, and may be an actual measured value or a predicted value of the corresponding region. The external environment data provision device 60 is, for example, a server device that provides a weather forecast site or the like on the Web. In accordance with a request for acquisition of external environment data on a geographical position specified from the information processing device 30, the external environment data provision device 60 transmits the corresponding external environment data on the geographical position to the information processing device 30. In the first embodiment, the external environment data includes at least outside air temperature information.

FIG. 1 illustrates a case where the ventilation control system 1 includes one ventilation system 10 as an example. However, the ventilation control system 1 may include a plurality of ventilation systems 10. In this case, the information processing device 30 performs ventilation control on the ventilation equipment 11 in the plurality of ventilation systems 10, allowing effective use of information processing resources.

Next, detailed configurations of the ventilation equipment 11 constituting the ventilation system 10 and the information processing device 30 will be described.

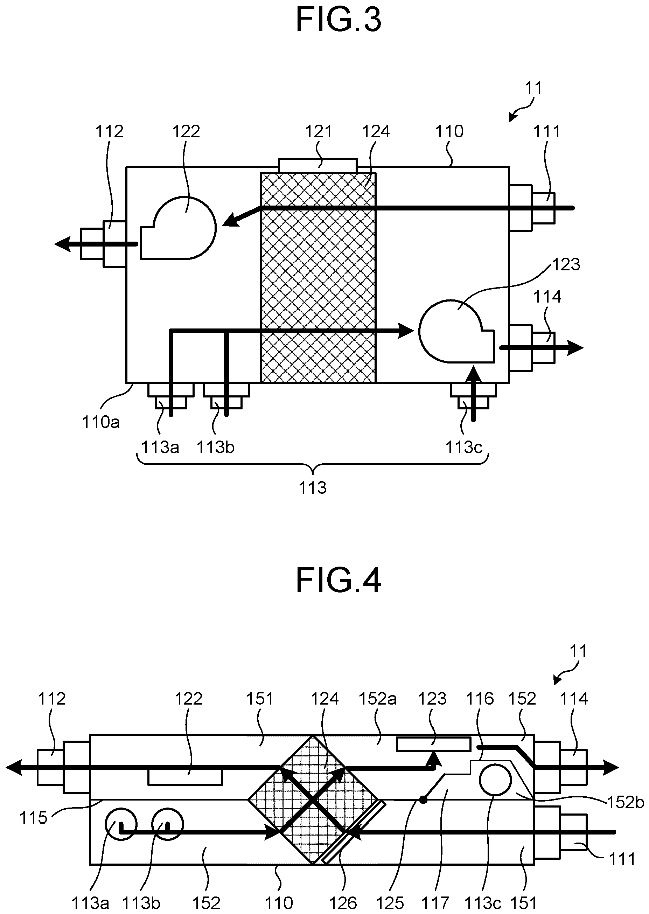

FIG. 3 is a top opened-up view schematically illustrating an example of an internal configuration of the ventilation equipment used in the ventilation control system according to the first embodiment. FIG. 4 is a side opened-up view schematically illustrating the example of the internal configuration of the ventilation equipment used in the ventilation control system according to the first embodiment. As will be described later, FIG. 4 illustrates a case where heat exchange ventilation is performed.

The ventilation equipment 11 is an apparatus that can adjust supply air and exhaust air states in the building 2, individually, and includes a ventilator body 110 installed, for example, in a ceiling inside the building 2. The ventilator body 110 includes an air intake opening connection 111, an air supply opening connection 112, air return opening connections 113, and an air exhaust opening connection 114. The air intake opening connection 111 is connected to an air intake duct (not illustrated) that connects an air intake opening (not illustrated) provided in an exterior wall of the building 2 and the ventilator body 110. Outside air is drawn into the ventilator body 110 from the air intake opening connection 111. The air supply opening connection 112 is connected to an air intake duct (not illustrated) that connects an air supply opening (not illustrated) provided in a ceiling or the like in the room of the building 2 and the ventilator body 110. Outside air is supplied into the room from the air supply opening connection 112.

Each air return opening connection 113 is connected to an air return duct (not illustrated) that connects an air return opening (not illustrated) provided in a ceiling or the like in a room and the ventilator body 110. Air in the room is drawn into the ventilator body 110 from the air return opening connection 113. In the example of FIG. 3, three air return opening connections 113a, 113b, and 113c are provided in the building 2. Here, the air return opening connection 113a is connected to an air return opening (not illustrated) provided in a toilet, the air return opening connection 113b is connected to an air return opening (not illustrated) provided in a dressing room, and the air return opening connection 113c is connected to an air return opening (not illustrated) provided in a bathroom. The air exhaust opening connection 114 is connected to an air exhaust duct (not illustrated) that connects an air exhaust opening (not illustrated) provided in an exterior wall of the building 2 and the ventilator body 110. Indoor air is exhausted from the air exhaust opening connection 114 of the ventilator body 110. Hereinafter, the air intake duct, the air supply duct, the air return ducts, and the air exhaust duct are simply referred to as ducts when not distinguished from one another.

As illustrated in FIG. 4, the ventilator body 110 includes a partition member 115 inside so that air drawn in from the air intake opening connection 111 is sent out from the air supply opening connection 112, and air drawn in from the air return opening connections 113 is exhausted from the air exhaust opening connection 114. Hereinafter, an air passage formed inside the ventilator body 110 from the air intake opening connection 111 to the air supply opening connection 112 is referred to as a supply air passage 151, and an air passage formed inside the ventilator body 110 from the air return opening connections 113 to the air exhaust opening connection 114 is referred to as an exhaust air passage 152. Outside air flows through the supply air passage 151, and indoor air flows through the exhaust air passage 152.

As illustrated in FIGS. 3 and 4, the position of the air return opening connection 113c is disposed away from the positions of the air return opening connections 113a and 113b. The air return opening connections 113a and 113b are provided on the air supply opening connection 112 side of the center of a side surface 110a of the ventilator body 110. The air return opening connection 113c is provided on the air exhaust opening connection 114 side of the center of the side surface 110a. More specifically, the air return opening connections 113a and 113b are positioned upstream of a heat exchange unit 124 in the exhaust air passage 152, and the air return opening connection 113c is positioned downstream of the heat exchange unit 124 in the exhaust air passage 152.

Thus, the exhaust air passage 152 includes a first exhaust air passage 152a connecting the air return opening connections 113a and 113b and the air exhaust opening connection 114, and a second exhaust air passage 152b connecting the air return opening connection 113c and the air exhaust opening connection 114. The ventilator body 110 includes a partition member 116 that partitions the exhaust air passage 152 downstream of the heat exchange unit 124 into the first exhaust air passage 152a and the second exhaust air passage 152b. An opening 117 that allows connection to the first exhaust air passage 152a is provided in a part of the partition member 116.

As illustrated in FIGS. 3 and 4, the ventilation equipment 11 includes a control unit 121, an air supply power unit 122, an air exhaust power unit 123, the heat exchange unit 124, an air passage switching unit 125, and a supply air filter 126. In FIGS. 3 and 4, the air supply power unit 122, the air exhaust power unit 123, the heat exchange unit 124, the air passage switching unit 125, and the supply air filter 126 are disposed inside the ventilator body 110.

The control unit 121 is electrically connected to the air supply power unit 122, the air exhaust power unit 123, and the air passage switching unit 125 individually. The control unit 121 is connected to the information processing device 30 via the information conversion device 15 and the network 70, and is also connected to the ventilation controller 12. The control unit 121 can receive control instructions from both the information processing device 30 and the ventilation controller 12, and includes a function to transmit information as necessary. In accordance with a control instruction from the information processing device 30 or the ventilation controller 12, the control unit 121 controls the operations of the air supply power unit 122, the air exhaust power unit 123, and the air passage switching unit 125 by signals. In one example, the control unit 121 controls on or off, the output strength, etc. of the air supply power unit 122 or the air exhaust power unit 123. In one example, the control unit 121 switches the exhaust air passage 152 by the air passage switching unit 125 in accordance with an instruction from the information processing device 30. As described above, the exhaust air passage 152 includes the first exhaust air passage 152a and the second exhaust air passage 152b. The air passage switching unit 125 switches between passing indoor air through the first exhaust air passage 152a and passing indoor air through the second exhaust air passage 152b.

Note that terminals that can transmit instructions to the control unit 121 or can receive data from the control unit 121 need not be limited to two systems, and may be three or more systems. The control unit 121 determines the order of priority of operation instructions received from the information processing device 30 and the ventilation controller 12, according to predetermined conditions, and controls the operation of at least one of the air supply power unit 122, the air exhaust power unit 123, and the air passage switching unit 125 in accordance with a higher-priority instruction.

The control unit 121 may cause the display unit 53 of the operating terminal 50 to display display information including, for example, the operating state of the ventilation equipment 11. In one example, the control unit 121 of the ventilation equipment 11 transmits, to the operating terminal 50, display information in which the current operating states of the air supply power unit 122, the air exhaust power unit 123, and the air passage switching unit 125 or operation flows of these functions are put in a predetermined framework. In the operating terminal 50, when the communication unit 51 receives the display information from the ventilation equipment 11, the display processing unit 54 displays the display information on the display unit 53. An example of the predetermined framework is a frame in an application to display operating state information on the operating terminal 50 or a display function of the application, or the like. The display information is generated in which the current operating states of the air supply power unit 122, the air exhaust power unit 123, and the air passage switching unit 125 or the operation flows of these functions are put in the predetermined framework as predetermined mode states. In one example, conceptual moving images showing how the air supply power unit 122, the air exhaust power unit 123, and the air passage switching unit 125 are operating are displayed on the display unit 53.

The air supply power unit 122 operates to draw in outside air from the air intake opening connection 111 and send the outside air into the room via the air supply opening connection 112. That is, the air supply power unit 122 produces a supply air flow that is an outside air flow in the supply air passage 151.

The air exhaust power unit 123 operates to take in indoor air from the air return opening connections 113 and exhaust the indoor air taken in to the outside through the air exhaust opening connection 114. That is, the air exhaust power unit 123 produces an exhaust air flow that is an indoor air flow in the exhaust air passage 152.

The air supply power unit 122 and the air exhaust power unit 123, the details of which are not illustrated, typically include a fan and an electric motor that drives the fan.

Since the ventilation equipment 11 assumed in the first embodiment bears a main ventilation function in the house, air return openings connected to the air return opening connections 113 are generally provided in places where humidity or odor is likely to occur, such as a bathroom and a toilet. At this time, if air exhaust from the air return openings is not stably controlled, air in the bathroom or the toilet, which should be normally directly exhausted, may leak out into living spaces such as a living room and a bedroom inside the same building 2. In particular, the ventilation control system 1 according to the first embodiment is required to finely control the strength of the air supply power unit 122 and the air exhaust power unit 123, that is, finely set air volume control in view of energy saving. Therefore, it is desirable that the electric motor of the air exhaust power unit 123 be controlled with direct current that excels in control. There are electric motors that operate on alternating current, in addition to electric motors that operate on direct current. An electric motor that operates on alternating current has the advantage of being able to supply electric power while reducing loss even when there is some disturbance, because temporal changes in current and voltage are both wavelike, but on the other hand, has the disadvantage of varying widely as compared with an electric motor that operates on direct current.

There is no particular limitation on the electric motor of the air supply power unit 122. However, an electric motor controlled with alternating current, which has an advantage in power consumption, can reduce energy loss more than one capable of performing fine control. Therefore, it is desirable to use an electric motor controlled with alternating current in the air supply power unit 122.

The fans used in the air supply power unit 122 and the air exhaust power unit 123 are desirably sirocco fans. In particular, the ventilation equipment 11 used in the first embodiment is assumed to support the entire building 2 or one entire floor. Therefore, it is assumed that the ducts are connected to the air intake opening connection 111, the air supply opening connection 112, the air return opening connections 113, and the air exhaust opening connection 114, individually, causing large pressure losses. It is also expected that pressure loss in the heat exchange unit 124 is large. From the above, it is desirable to use sirocco-type fans that can blow air even when there is pressure loss.

Note that the air supply power unit 122 and the air exhaust power unit 123 are not limited to those described above, and may be of any form as long as they include an air-blowing function and can control the volume of air by adjusting the strength. The air supply power unit 122 and the air exhaust power unit 123 may be of a pump structure to push out air, or may be of a turbine structure using ultrasonic vibration or steam. The fans are not limited to sirocco fans. The ventilation equipment 11 may not support the entire building 2 or one entire floor, and may be designed to be mounted solely to a room. It is also assumed that the ventilation equipment 11 designed to be mounted solely to a room uses line flow fans (registered trademark), propeller fans, turbo fans, or the like.

The heat exchange unit 124 includes a function to allow both supply air that is air flowing through the supply air passage 151 and exhaust air that is air flowing through the exhaust air passage 152 to pass, crossing each other, to facilitate the transfer of heat in places of intersection. The heat exchange unit 124 has a structure in which ventilation air passages having a corrugated or honeycomb shape are stacked. In the heat exchange unit 124, ventilation air sections through which supply air passes and ventilation air sections through which exhaust air passes are stacked alternately layer by layer.

A member constituting the ventilation air passages is formed, for example, of paper, ceramic, or metal to which a porous material having many pores and a high specific surface area, such as zeolite or silica gel, is attached. The heat exchange unit 124 includes a function to allow supply air and exhaust air to pass, to store heat of either the supply air or the exhaust air having a higher temperature, and release the heat to the supply air or the exhaust air having a lower temperature.

The heat exchange unit 124, which is assumed to have the above-described structure, only needs to be able to, in particular, control the heat of supply air and exhaust air equally. The heat exchange unit 124 is not limited in structure. In one example, a heat pump, a Peltier element, or the like that electrically performs heating and cooling may be used as the heat exchange unit 124. Other methods can also be used as long as they are means that can control the heat of supply air and exhaust air, and can adjust temperature more efficiently than common heaters etc.

The heat exchange unit 124 may include a function to exchange humidity in addition to temperature. When the air conditioning unit 13 is an air conditioner, the air conditioning unit 13 typically includes the dehumidification function or the like in addition to the heating and cooling function. Thus, in summer, the air conditioning unit 13 is often used not only to adjust temperature but also to maintain humidity inside the building 2. Therefore, the heat exchange unit 124 of the ventilation equipment 11 including the humidity exchange function can obtain higher energy saving performance.

The heat exchange function of the heat exchange unit 124 varies in performance depending on the flow rates of supply air and exhaust air. When the air passage length and the pressure loss in the heat exchange unit 124 are the same between supply air and exhaust air, it is desirable to equalize the supply air flow rate and the exhaust air volume. More specifically, the amount of heat transfer to the heat exchange unit 124 depends on residence time with heat. Therefore, it is desirable to substantially equalize the volumes of supply air and exhaust air to achieve uniform heat transfer.

Conversely, when the air passage length and the pressure loss in the heat exchange unit 124 are different between supply air and exhaust air, it is necessary to determine a balance between supply air and exhaust air at an appropriate air volume ratio. In particular, when heat exchange operation is performed, it is desirable to efficiently operate the heat exchange unit 124. Therefore, it is desirable to calculate individual air residence times from conditions of the air passage lengths and the pressure losses so as to increase heat exchange efficiency, and set the supply air volume and the exhaust air volume so that the residence times are substantially equal. The supply air volume and the exhaust air volume depend on the outdoor temperature and humidity, wind speed, wind direction, etc., and furthermore, the performance varies depending on the moisture absorption state of the heat exchange unit 124, so that the residence times of supply air and exhaust air also vary. When the difference in residence time between supply air and exhaust air is within 10%, a decrease in heat exchange efficiency is kept within 30, and energy saving performance is not significantly degraded. Thus, it is desirable that the supply air volume and the exhaust air volume be set such that the difference in residence time between supply air and exhaust air is within 10%. As described above, by providing a function to measure outdoor and indoor temperatures and humidities, and providing the control unit 121 with a function to automatically adjust the supply air volume and the exhaust air volume so that the difference in residence time between supply air and exhaust air is within 10%, heat exchange can be performed with the temperature and humidity of outside air etc. taken into consideration. As a result, the performance of the heat exchange unit 124 is further improved.

The air passage switching unit 125 includes a function to switch by operation between mainly using the air return opening connections 113a and 113b and mainly using the air return opening connection 113c. As illustrated in FIG. 4, the air passage switching unit 125 is provided so that the opening 117 provided in the partition member 116 separating the second exhaust air passage 152b inside the exhaust air passage 152 can be brought into an open state or a closed state. In this description, a state in which the opening 117 is not closed by the air passage switching unit 125 is referred to as an open state, and a state in which the opening 117 is closed by the air passage switching unit 125 is referred to as a closed state. In this example, in the closed state, the opening 117 is completely closed by the air passage switching unit 125, and in the open state, the first exhaust air passage 152a is not completely closed by the air passage switching unit 125.

When the heat exchange unit 124 is used to perform the heat exchange operation, as illustrated in FIG. 4, the air passage switching unit 125 is brought into the closed state to cover the opening 117. Consequently, the exhaust air passage 152 is constituted by the first exhaust air passage 152a. That is, an air passage is formed in which indoor air, in this example, air in the toilet and the dressing room is drawn in from the air return opening connections 113a and 113b, and the indoor air passes through the heat exchange unit 124 and is exhausted to the outside from the air exhaust opening connection 114. At this time, the second exhaust air passage 152b that runs through the air return opening connection 113c to the air exhaust opening connection 114 is closed by the air passage switching unit 125. That is, all air flowing in from the air return opening connections 113 by the operation of the air exhaust power unit 123 is passed through the heat exchange unit 124 to the air exhaust opening connection 114. At this time, the air flowing in from the air return opening connections 113a and 113b is adjusted in temperature by the heat exchange unit 124 that releases heat or absorbs heat depending on a temperature difference between the air and the outside air flowing through the supply air passage 151. A setting in which the opening 117 is brought into the closed state by the air passage switching unit 125 is the first setting.

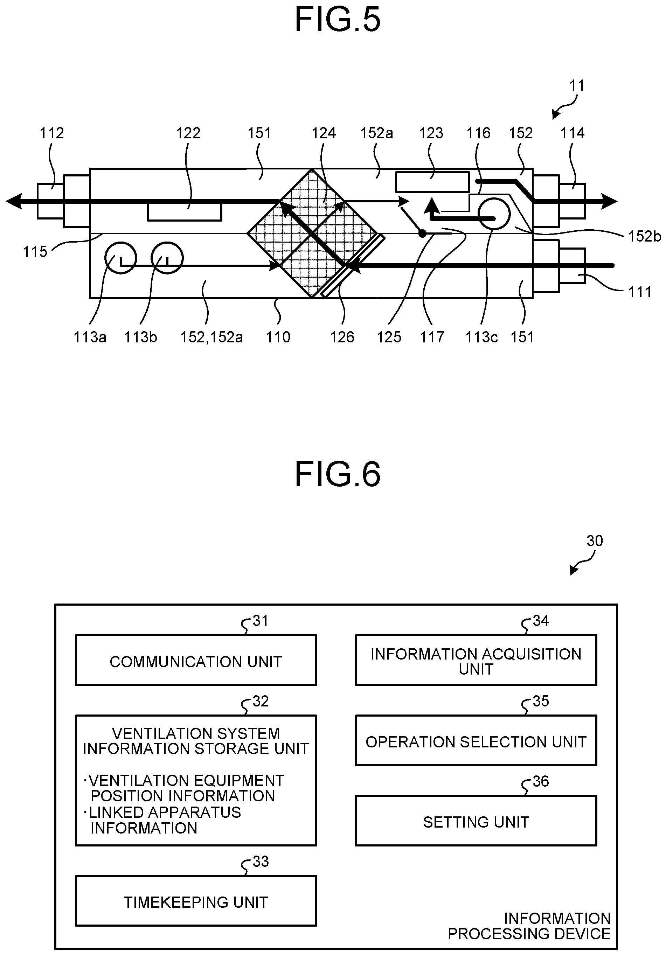

FIG. 5 is a side opened-up view schematically illustrating the example of the internal configuration of the ventilation equipment used in the ventilation control system according to the first embodiment. FIG. 5 illustrates a case where the opening 117 is brought into the open state by the air passage switching unit 125. The same components as those in the above-described drawings are assigned the same reference numerals and will not be described.

When the heat exchange operation is not performed, as illustrated in FIG. 5, the air passage switching unit 125 is set in the open state to open the opening 117. In this example, when the opening 117 is brought into the open state, the air passage switching unit 125 is set not to bring the first exhaust air passage 152a into a completely closed state so that the first exhaust air passage 152a is also connected to the air exhaust opening connection 114. That is, the exhaust air passage 152 is constituted by the first exhaust air passage 152a and the second exhaust air passage 152b. In this case, an air passage is formed in which indoor air, that is, air in the bathroom is drawn in mainly from the air return opening connection 113c, and the indoor air is easily exhausted to the outside from the air exhaust opening connection 114 without passing through the heat exchange unit 124. Since the first exhaust air passage 152a is not completely closed by the air passage switching unit 125, an air passage is also formed in which indoor air, that is, air in the toilet and the dressing room is drawn in from the air return opening connections 113a and 113b, and the indoor air passes through the heat exchange unit 124 and is exhausted to the outside from the air exhaust opening connection 114. As described above, since the air passage switching unit 125 partially closes the first exhaust air passage 152a, air is mainly exhausted through the second exhaust air passage 152b, and air exhausted through the first exhaust air passage 152a is less than that in FIG. 4. A setting in which the opening 117 is brought into the open state by the air passage switching unit 125 is the second setting. In this way, the air passage switching unit 125 can select between heat exchange ventilation in which supply air and exhaust air are passed through the heat exchange unit 124 to exchange heat between the supply air and the exhaust air, and non-heat exchange ventilation in which at least one of supply air and exhaust air is not passed through the heat exchange unit 124.

The air return opening connection 113c is often connected to the air return opening installed in the bathroom, and is assumed to be used especially for exhausting high-humidity air after bathing. If high-humidity air is passed through the heat exchange unit 124, moisture accumulates in the heat exchange unit 124, reducing temperature exchange performance and causing mold growth. Therefore, in the second exhaust air passage 152b, the non-heat exchange operation is performed in which air in the bathroom flowing in from the air return opening connection 113c is exhausted from the air exhaust opening connection 114 without passing through the heat exchange unit 124. This results in a reduction in the probability of high-humidity air from the bathroom being passed through the heat exchange unit 124, and the prevention of the degradation of the temperature exchange performance of the heat exchange unit 124 and the growth of mold.

When the non-heat exchange operation is performed, the air passage not passing the heat exchange unit 124 is dominant, so that pressure loss in the air passage decreases, and an amount of ventilation is easily obtained. Consequently, even when the operation of either the air supply power unit 122 or the air exhaust power unit 123 is limited, the amount of ventilation inside the building 2 at the time of the non-heat exchange operation can be kept equal to the amount of ventilation inside the building 2 at the time of the heat exchange operation. That is, while the non-heat exchange operation is performed, the operation of the power unit that is at least one of the air supply power unit 122 and the air exhaust power unit 123 is limited as compared with that in the heat exchange operation. This can reduce energy consumed by the operation of the power unit while maintaining the amount of ventilation, providing an energy saving effect. The non-heat exchange operation may include this power unit input adjustment as a function. That is, the first setting and the second setting may be such that in addition to switching between the air passages by the air passage switching unit 125, the operation of at least one of the air supply power unit 122 and the air exhaust power unit 123 is changed.

In the power unit input adjustment, it is desirable to limit the operation of the air supply power unit 122 if the life of the building 2 is taken into consideration. By weakening the operation of the air supply power unit 122, the air pressure inside the building 2 is adjusted to negative pressure. Under negative pressure, moisture, odor, etc. accumulated in the rooms are easily exhausted, and the release of moisture, gas, etc. adsorbed on walls etc. is also accelerated. In addition, the inflow of outside air through gaps in the building 2 increases. As a result, the amount of air passing through the heat exchange unit 124 and the supply air filter 126 decreases, leading to the prevention of performance degradation due to clogging or contamination of the heat exchange unit 124 and the supply air filter 126, and an increase in pressure loss in supply air. This can expect the effect of preventing an increase in energy loss due to the deterioration of the ventilation equipment 11. Thus, when the power unit input adjustment is performed in the second setting, basically, control to weaken the operation of the air supply power unit 122 is prioritized.

On the other hand, when the air exhaust power unit 123 is limited, the air pressure inside the building 2 tends to positive pressure. In this case, flows of air through the gaps in the building 2 to the outside occur, which is expected to have the effect of preventing the inflow of contamination from the outside into the room. In addition, air that has passed through the supply air filter 126 can be preferentially supplied to the interior of the room, so that the interior of the room is cleaned, and the risk of impairing user comfort is reduced. On the other hand, the adsorption of gas, moisture, etc. generated in the room onto walls is promoted. Thus, it is desirable not to select continuation of operation in a state where the air exhaust power unit 123 is controlled at all times. That is, the first setting and the second setting are desirably settings in which air exhaust operation is continued.

The control to weaken the operation of the air supply power unit 122 can be performed, using the condition of humidity at the installation position of the ventilation equipment 11 and the concentration of outside contamination. The condition of humidity and the concentration of outside contamination can be acquired, in one example, as external environment data from the external environment data provision device 60. In one example, the control unit 121 selectively performs control to weaken the operation of the air supply power unit 122 when the humidity is low or the concentration of outside contamination is high.

The positive pressure or negative pressure control can also be obtained as effects by enhancing the operations of the air supply power unit 122 and the air exhaust power unit 123, which, however, leads to an increase in the amount of ventilation and also an increase in energy loss in the power units themselves. Therefore, it is desirable to perform control to weaken the operations of the air supply power unit 122 and the air exhaust power unit 123 to achieve these effects. That is, setting is desirably performed such that the first setting is equal to the second setting in the operation of either the air supply power unit 122 or the air exhaust power unit 123, and supply air or exhaust air that is not equally set in the first setting and the second setting is less than the supply air or the exhaust air that is equally set, and the supply air or the exhaust air that is not equally set is less in the second setting than in the first setting. The way to weaken the operations of the air supply power unit 122 and the air exhaust power unit 123 is desirably set such that manual or automatic adjustment is possible depending on the installation conditions of the ventilation equipment 11. Loads on the air supply power unit 122 and the air exhaust power unit 123 depend on the lengths of the ducts connected between the ventilation equipment 11 and the air intake opening, the air supply opening, the air return openings, and the air exhaust opening in the building 2. Therefore, the operations of the air supply power unit 122 and the air exhaust power unit 123 are adjusted according to the loads that vary depending on the installation conditions of the ducts.

One of the air return opening connections 113 is provided for the exhaust of disturbing odor, and thus is often connected to a toilet. In this example, the air return opening connection 113a is for the toilet. If the operation of drawing in indoor air and exhausting the air to the outside is stopped in the toilet, odor may leak out into other rooms. Therefore, as illustrated in FIG. 5, it is desirable that the air passage switching unit 125 be configured not to completely close the first exhaust air passage 152a even at the time of the non-heat exchange operation so that minimum air flows from the toilet to the outside of the building 2 via the ventilation equipment 11.

However, the air return openings to which the air return opening connections 113a, 113b, and 113c are connected may be changed according to conditions in the building 2. That is, this example shows the case where the air return opening connections 113a, 113b, and 113c are connected to the air return openings in the toilet, the dressing room, and the bathroom, respectively, but each may be mounted to a room different from that in this example. For example, the air return opening connection 113a may be mounted to a room that is not a toilet, and the air return opening connection 113b may be mounted to a room that is not a dressing room. When the non-heat exchange operation is performed in this mounted state, since the air return opening connections 113a and 113b are not mounted to a toilet, indoor air does not necessarily need to be taken in from the air return opening connections 113a and 113b, and the air passage switching unit 125 may be operated to completely prevent the inflow of indoor air from the air return opening connections 113a and 113b. That is, the air passage switching unit 125 may be configured to completely block the first exhaust air passage 152a in the open state.

In FIGS. 4 and 5, the air passage switching unit 125 is provided on the exhaust air passage 152 side, but the installation position of the air passage switching unit 125 is not limited thereto. That is, the first embodiment only requires one that can provide a non-heat exchange path that is a path through which air can be supplied or exhausted without passing through the heat exchange unit 124. Consequently, in one example, outside air can be taken into the room as it is to reduce discomfort caused by excessive heating or excessive cooling inside the building 2, or a flow not passing through the heat exchange unit 124 can be created, to prevent the contamination of the heat exchange unit 124 when a large amount of contaminated air is contained in supply air or exhaust air. If this object is achieved, the air passage switching unit 125 or a switching air passage in which the air passage switching unit 125 is installed for ventilation without passing through the heat exchange unit 124 only needs to be in the form of being provided in at least one of the supply air passage 151 and the exhaust air passage 152. Furthermore, the form of the non-heat exchange path that is a path not passing through the heat exchange unit 124 is not limited. However, when the non-heat exchange path is provided in the supply air passage 151, it is desirable to pass through the supply air filter 126 in the states of both the path passing through the heat exchange unit 124 and the non-heat exchange path.

Returning to FIG. 4, the supply air filter 126 prevents the heat exchange unit 124 from being contaminated by contaminants such as PM 2.5, pollen, mold, and insects contained in outside air drawn in from the outside, and prevents these contaminants from entering the room. As the supply air filter 126, a filter formed of a nonwoven fabric or the like is typically used. However, if the pressure loss is too high, the load on the air supply power unit 122 increases, and the energy loss increases. For this reason, it is desirable to select one having a lower pressure loss and high contamination blocking performance as the supply air filter 126. An example of the supply air filter 126 like this is one woven in a pleated shape to lower linear air speed, or one with charged fibers woven in. In particular, the supply air filter 126 desirably has a structure that can be easily removed by the user. In addition, the supply air filter 126 desirably has a structure that allows the selection of the type of filter according to its use. Note that the supply air filter 126 only needs to prevent the adhesion of contaminants to the heat exchange unit 124 and the inflow of contaminants into the room as described above, and is not limited to having the form of a filter. When the supply air filter 126 has the form of a filter, the filter is commonly replaced due to its life, which, however, involves running costs. Therefore, a device using an electrical technique such as an electric dust collector thus may be installed to prevent the adhesion and inflow of contaminants. In this case, no filter replacement occurs, and cleaning is possible.

FIG. 6 is a block diagram illustrating an example of a functional configuration of the information processing device used in the ventilation control system according to the first embodiment. The information processing device 30 includes a communication unit 31, a ventilation system information storage unit 32, a timekeeping unit 33, an information acquisition unit 34, an operation selection unit 35, and a setting unit 36.

The communication unit 31 communicates with the ventilation equipment 11, the air conditioning unit 13, the operating terminal 50, and the external environment data provision device 60 via the network 70.

The ventilation system information storage unit 32 stores ventilation system information that is information on the ventilation system 10 to be controlled. The ventilation system information includes ventilation equipment position information and linked apparatus information. The ventilation equipment position information includes installation position information indicating a geographical position where the ventilation equipment 11 is installed. An example of the installation position information is an address, a zip code, or the like. When the information processing device 30 controls a plurality of ventilation systems 10 connected to the network 70, the installation position information is associated with the ventilation equipment 11 in the ventilation equipment position information. That is, the ventilation equipment position information is information in which the ventilation equipment 11 is associated with the installation position information on the ventilation equipment 11. In the first embodiment, the installation position information is information used to acquire the type of climate and outside air temperature information at the installation position of the ventilation equipment 11. In one example, the ventilation equipment position information is input by the user at the time of registration of user information performed to use the application for operation necessary for operating the ventilation control system 1 on the operating terminal 50. When the user information is registered by the operating terminal 50, the ventilation equipment 11 and the installation position information in the user information are associated with each other so as to configure the ventilation equipment position information. If there is a user information storage unit that stores the user information, the ventilation equipment 11 is associated with the installation position in the user information, and thus the user information storage unit becomes the ventilation system information storage unit 32.

The linked apparatus information is information in which the ventilation equipment 11 is associated with the air conditioning unit 13 provided in the room to be ventilated by the ventilation equipment 11. In one example, the linked apparatus information is also registered when the user registers the user information via the operating terminal 50.

The timekeeping unit 33 keeps the date and time at the position of the information processing device 30. In response to a current date acquisition request from the information acquisition unit 34, the timekeeping unit 33 returns the date on which the acquisition request has been received to the information acquisition unit 34 as the current date.

The information acquisition unit 34 acquires control determination information including at least one piece of information selected from climate type determination information that is information for determining the type of climate at the installation position of the ventilation equipment 11, outside air temperature information indicating the air temperature outside the building 2, and operation information indicating the operating state of the air conditioning unit 13 in the room. The climate type determination information includes a current date that is a date at the point in time when determination is performed, and the installation position information on the ventilation equipment 11. In one example, the current date is acquired from the timekeeping unit 33, and the installation position information on the ventilation equipment 11 is acquired from the ventilation system information storage unit 32. The outside air temperature information is acquired from the external environment data provision device 60 via the network 70 by specifying the installation position of the ventilation equipment 11. The operation information is acquired from the air conditioning unit 13 provided in the same room as the ventilation equipment 11 via the network 70 by referring to the linked apparatus information in the ventilation system information storage unit 32. The operation information includes connection information indicating whether the air conditioning unit 13 is connected, and operation type information indicating the type of operation of the air conditioning unit 13 when the air conditioning unit 13 is connected. In one example, the connection information is information indicating whether the air conditioning unit 13 is installed in the room to be ventilated by the ventilation equipment 11, that is, in the same room as the ventilation equipment 11. In addition, the connection information may include information indicating whether the air conditioning unit 13 is powered on or off when the air conditioning unit 13 is installed in the same room. This is because both when the air conditioning unit 13 is not connected and when the air conditioning unit 13 is powered off, a signal cannot be transmitted from the air conditioning unit 13, so that both can be regarded as the same state. That is, the information acquisition unit 34 determines that the air conditioning unit 13 is unconnected when there is no signal response from the air conditioning unit 13 within a predetermined period after requesting the air conditioning unit 13 to transmit the operation information. The operation type information is information indicating whether the air conditioning unit 13 is performing heating and cooling operation or operation such as dehumidification operation other than the heating and cooling operation. The operation type information only needs to include information indicating whether or not the air conditioning unit 13 is performing the heating and cooling operation.

The operation selection unit 35 selects one of the first setting and the second setting, using the control determination information. When the control determination information is only the climate type determination information, the operation selection unit 35 determines the type of climate using the climate type determination information. Specifically, the operation selection unit 35 derives the latitude and longitude, altitude, climate, etc. of the region from the installation position of the ventilation equipment 11 in the climate type determination information, and derives the type of climate using the latitude and longitude, altitude, and climate, and the current date in the climate type determination information. Using the installation position of the ventilation equipment 11 allows the deriving of the type of climate based on the actual environment unique to the region with the derived latitude and longitude, altitude, climate, etc. taken into account. Types of climate defined here are classified into two: the heating and cooling season including summer and winter when it is assumed that the air conditioning unit 13 is used inside the building 2; and the intermediate season including spring and autumn when it is assumed that the air conditioning unit 13 is not used much, other than the heating and cooling season. The operation selection unit 35 selects the first setting when the determined type of climate is the heating and cooling season, and selects the second setting when the determined type of climate is the intermediate season.

Climate type classification is not limited to a particular method. For example, using a method defined in Japanese Industrial Standards (JIS) C 9612:2013 comment "j) Heating and cooling periods and occurrence times", the cooling season, the heating season, and the intermediate season may be calculated in advance for each region to define the types of climate of each region, which may be held by the operation selection unit 35. Outside air temperature data on each day of the year at the installation position of the ventilation equipment 11 can be acquired from the external environment data provision device 60, and the cooling season, the heating season, and the intermediate season other than these seasons can be defined according to the above definitions, using the outside air temperature data. Then, information in which the installation position of the ventilation equipment 11 is associated with the definitions of the types of climate can be held. This allows the user to cause, without trouble, the ventilation equipment 11 to perform operation that takes energy saving into consideration, according to the region where the user lives.

Alternatively, using the operating terminal 50, the user may previously define the types of climate according to the user's preference by inputting and setting the periods of summer, winter, and the intermediate season by date. This allows the user to maintain comfort under environmental conditions according to the user's preference, regardless of the region.

It is considered that usually, cooling operation is performed in summer, and heating operation is performed in winter. That is, when the type of climate is the heating and cooling season, it is considered that the user is operating the air conditioning unit 13 for heating and cooling. In this case, it is desirable to perform heat exchange ventilation as illustrated in FIG. 4 so that the indoor temperature environment does not become uncomfortable for the user due to the introduction of outside air by ventilation. By performing heat exchange ventilation, the indoor temperature environment is maintained without requiring extra energy. Therefore, in the first embodiment, the operation selection unit 35 selects the first setting when the type of climate determined using the climate type determination information is the heating and cooling season.

On the other hand, it is considered that the heating and cooling operation is not generally performed in the intermediate season. That is, when the type of climate is the intermediate season, it is considered that the user is not operating the air conditioning unit 13 for heating and cooling. In this case, even if the indoor environment approaches outside air due to the introduction of outside air by ventilation, it is considered that the user does not feel uncomfortable, and it is desirable to perform non-heat exchange ventilation as illustrated in FIG. 5. Since the air conditioning unit 13 is not being operated for heating and cooling, the indoor temperature environment is maintained without requiring extra energy even if non-heat exchange ventilation is performed. Therefore, in the first embodiment, the operation selection unit 35 selects the second setting when the type of climate determined using the climate type determination information is the intermediate season. As described above, in the first embodiment, by using the installation position of the ventilation equipment 11 and the current date, the type of climate can be determined according to the home environment of the user.

Many people operate the air conditioning unit 13 based on the type of climate. That is, many people provide a cooling operation instruction in summer, provide a heating operation instruction in winter, and do not operate the air conditioning unit 13 for heating and cooling in the intermediate season, and instruct ventilation in some cases. The first embodiment uses this habit of people to determine that the air conditioning unit 13 is operated according to the type of climate, and operates the ventilation equipment 11 assuming that this determination is correct. For this reason, in the first embodiment, the installation position of the ventilation equipment 11 and the current date are acquired as the climate type determination information that is information for determining the type of climate.

When the control determination information is only the outside air temperature information, the operation selection unit 35 determines whether or not the outside air temperature information is in an air conditioning non-recommended temperature range indicating a temperature range in which use of the heating and cooling apparatus such as the air conditioning unit 13 is not recommended. The operation selection unit 35 selects the first setting when the outside air temperature information is not in the air conditioning non-recommended temperature range, and selects the second setting when the outside air temperature information is in the air conditioning non-recommended temperature range. The air conditioning non-recommended temperature range corresponds to a heating and cooling non-recommended temperature range.

According to JIS C 9612:2013, heating operation is used when the air temperature is less than 16 degrees, and cooling is used when the air temperature is 24 degrees or more. When energy loss and bodily sensation are considered, a chill is felt at less than 17 degrees, and an unbearable heat is felt at 29 degrees or more. A temperature range in which the outside air temperature is neither hot nor cold defined with these taken into account is the air conditioning non-recommended temperature range. Note that bodily sensation varies among people, and it is difficult to set a temperature range in which all people feel neither hot nor cold. Therefore, in one example, a statistical temperature range in which many people feel neither hot nor cold is set as the air conditioning non-recommended temperature range. The air conditioning non-recommended temperature range may be determined in advance based on the above example, or may be determined by another method. In one example, the air conditioning non-recommended temperature range may be input by the user using the operating terminal 50 or the like, or the air conditioning non-recommended temperature range may be automatically adjusted in a predetermined rule by learning from the daily usage pattern of the air conditioning unit 13. In these cases, the air conditioning non-recommended temperature range can be a temperature range suitable for the user's temperature environment or bodily sensation.

Thus, when the outside air temperature is in the air conditioning non-recommended temperature range, the comfort of the user is determined based on the fact that many people feel neither hot nor cold in the first embodiment. That is, when the outside air temperature information at the installation position of the ventilation equipment 11 is in the air conditioning non-recommended temperature range, it is determined that the air conditioning unit 13 is not being operated. When the outside air temperature information is outside the air conditioning non-recommended temperature range, it is determined that the air conditioning unit 13 is being operated. Assuming that this determination is correct, the setting of operation for the ventilation equipment 11 is selected as described above. By determining whether or not the outside air temperature information is in the air conditioning non-recommended temperature range, it can be determined whether the air conditioning unit 13 is being operated, regardless of the type of climate. As described above, in the first embodiment, the outside air temperature information at the installation position of the ventilation equipment 11 is acquired as information for determining the operation of the air conditioning unit 13.

When the control determination information is only the operation information, the operation selection unit 35 determines whether the air conditioning unit 13 is connected, using the connection information in the operation determination information. When the air conditioning unit 13 is not connected, the operation selection unit 35 selects the second setting. When the air conditioning unit 13 is connected, the operation selection unit 35 uses the operation type information in the operation information to determine whether the air conditioning unit 13 is performing the heating and cooling operation. The operation selection unit 35 selects the first setting when the heating and cooling operation is being performed, and selects the second setting when the heating and cooling operation is not being performed. The connection of the air conditioning unit 13 is determined based on whether the air conditioning unit 13 is installed in the room or not, and whether the air conditioning unit 13 in an installed state is powered on or off. Specifically, when the air conditioning unit 13 is not installed in the room, or when the air conditioning unit 13 is powered off, it is determined that the air conditioning unit 13 is not connected.

The climate at the installation position of the ventilation equipment 11 can be determined based on whether the air conditioning unit 13 is installed or not. In one example, the air conditioning unit 13 may not be installed in a region where the air temperature does not rise so much that cooling is required in summer, or a region where the air temperature does not drop so much that heating is required in winter. Furthermore, when the air conditioning unit 13 is installed, the climate at the installation position of the ventilation equipment 11 can be determined based on whether or not the air conditioning unit 13 is powered on. That is, when the air conditioning unit 13 is not powered on, it is considered that the user has determined that the temperature is not so high as to require cooling and the temperature is not so low as to require heating. Therefore, in the first embodiment, when the air conditioning unit 13 is not installed, it is determined that the region does not require the air conditioning unit 13, and the ventilation equipment 11 is operated with the assumption that this determination is correct. When the air conditioning unit 13 is not powered on, it is determined that the climate is of the type that does not require heating and cooling, and the ventilation equipment 11 is operated with the assumption that this determination is correct.

When the air conditioning unit 13 is installed, the user's home environment or bodily sensation can be determined based on whether the heating and cooling operation is being performed or not. That is, when the user feels cold or hot in the room, the user operates the air conditioning unit 13 for heating or cooling. When the user feels neither hot nor cold in the room, the user does not operate the air conditioning unit 13 for heating and cooling. Alternatively, when the climate of the user's home environment is different from that of the region where the building 2 is installed, the air conditioning unit 13 is being operated according to the climate of the user's home environment. In one example, in a case where the type of climate derived from the climate generally applied to the region including the installation position of the building 2 is autumn, but at the installation position of the building 2, the timing of shifting to autumn is late and the season is summer, the air conditioning unit 13 is operated for cooling at the installation position of the building 2. That is, the operation type information on the air conditioning unit 13 is closely related to the user's home environment or bodily sensation, and the user's home environment and bodily sensation at that point in time can be known from the operation type information. Therefore, in the first embodiment, the ventilation equipment 11 is operated using the operation type information.

Considering the above, the selection of setting for the ventilation equipment 11 by the operation selection unit 35 using the operation information is as follows. A case where the air conditioning unit 13 is not connected is a case where the air conditioning unit 13 is not being operated for heating and cooling, in which the outside air environment is an environment in which the user feels comfortable. Also in a case where the air conditioning unit 13 is connected and the heating and cooling operation is not being performed, the outside air is an environment in which the user feels comfortable. In these cases, the operation selection unit 35 selects the second setting, which is non-heat exchange ventilation, to bring the indoor environment closer to the outside air environment. On the other hand, when the air conditioning unit 13 is connected and the heating and cooling operation is being performed, the outside air environment is an environment in which the user feels uncomfortable. In this case, the operation selection unit 35 selects the first setting, which is heat exchange ventilation, to maintain the indoor environment produced by the air conditioning unit 13. Thus, in the first embodiment, the operation information including the connection information and the operation type information on the air conditioning unit 13 is acquired as information for determining the user's living environment or bodily sensation through the operation of the air conditioning unit 13.

When the control determination information is two or more of the climate type determination information, the outside air temperature information, and the operation information, the details described above are combined to make determinations. The order of determinations in this case is not particularly limited.

The setting unit 36 operates the ventilation equipment 11 according to the setting selected by the operation selection unit 35. Specifically, the setting unit 36 generates a setting instruction including the setting selected by the operation selection unit 35, and transmits the setting instruction from the communication unit 31 to the ventilation equipment 11. The setting instruction transmitted from the communication unit 31 reaches the ventilation equipment 11 via the network 70 and the information conversion device 15. Upon receiving the setting instruction, the control unit 121 of the ventilation equipment 11 controls the operations of the air supply power unit 122, the air exhaust power unit 123, and the air passage switching unit 125 according to the setting included in the setting instruction.

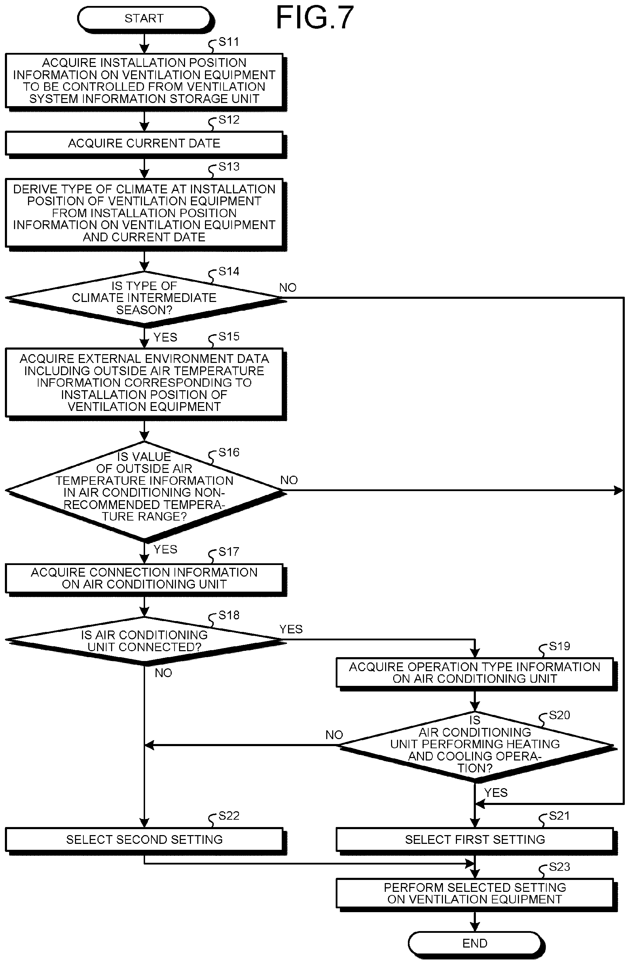

Next, a ventilation mode switching control method in the ventilation control system 1 will be described. FIG. 7 is a flowchart illustrating an example of a procedure of the ventilation mode switching control method in the ventilation control system according to the first embodiment. In FIG. 7, a procedure of a process in the information processing device 30 is described. Here, it is assumed that the user has registered the installation position of the ventilation equipment 11 and the linked apparatus information with the information processing device 30, using the operating terminal 50, and the ventilation equipment position information including the installation position of the ventilation equipment 11 and the linked apparatus information have been stored in advance in the ventilation system information storage unit 32.

First, the information acquisition unit 34 of the information processing device 30 acquires the installation position information on the ventilation equipment 11 to be controlled from the ventilation system information storage unit 32 (step S11). The information acquisition unit 34 acquires the current date indicating the date at the present time from the timekeeping unit 33 (step S12). Next, the operation selection unit 35 derives the type of climate at the installation position of the ventilation equipment 11 from the installation position information on the ventilation equipment 11 and the current date acquired (step S13). The operation selection unit 35 derives the type of climate based on the actual environment unique to the region, with the latitude and longitude, altitude, climate, etc. of the region derived from the installation position information on the ventilation equipment 11 and the current date taken into consideration.

Next, the operation selection unit 35 determines whether the derived type of climate is the intermediate season (step S14). When the derived type of climate is not the intermediate season (No in step S14), that is, the derived type of climate is the heating and cooling season, it is considered that heating and cooling is being performed in the room. That is, it is assumed that the outside is basically under an unpleasant temperature condition for the user. In this case, even if the operation of the air conditioning unit 13 cannot be confirmed, an environment is assumed in which the user uses some air conditioning means, and taking outside air as it is into the building 2 is likely to cause discomfort, and taking in outside air as it is is likely to cause energy loss. Furthermore, if the outside air temperature is comfortable for the user, operating the ventilation equipment 11 for heat exchange ventilation will not give discomfort to the user. Moreover, the intermediate season is a season in which a rapid change to an uncomfortable temperature zone is highly likely to occur, and the switching operation etc. of the ventilation equipment 11 can produce an unnecessary energy loss instead. Therefore, in the first embodiment, the operation selection unit 35 selects the first setting to provide the heat exchange operation for the ventilation equipment 11 (step S21).

On the other hand, when the derived type of climate is the intermediate season (Yes in step S14), the information acquisition unit 34 acquires the external environment data including the outside air temperature information corresponding to the installation position of the ventilation equipment 11 from the external environment data provision device 60 via the network 70 (step S15). In one example, the information acquisition unit 34 generates an acquisition request for the external environment data including the outside air temperature information at the installation position, and transmits the acquisition request from the communication unit 31 to the external environment data provision device 60. Upon receiving the acquisition request, the external environment data provision device 60 transmits the external environment data corresponding to the acquisition request to the information processing device 30. Then, the communication unit 31 of the information processing device 30 receives the external environment data, and the information acquisition unit 34 can acquire the external environment data.

After that, the operation selection unit 35 determines whether the value of the outside air temperature information in the acquired external environment data is in the air conditioning non-recommended temperature range (step S16). When the value of the outside air temperature information is not in the air conditioning non-recommended temperature range (No in step S16), it is considered that the outside air environment, though in the intermediate season, requires heating or cooling. In this case, similarly to the case of No in step S14, the operation selection unit 35 selects the first setting to provide the heat exchange operation for the ventilation equipment 11 (step S21).

On the other hand, when the value of the outside air temperature information is in the air conditioning non-recommended temperature range (Yes in step S16), the information acquisition unit 34 acquires the connection information on the air conditioning unit 13 (step S17). In one example, the information acquisition unit 34 refers to the linked apparatus information in the ventilation system information storage unit 32 to identify the air conditioning unit 13 linked to the ventilation equipment 11. The information acquisition unit 34 creates an acquisition request for the connection information and transmits the acquisition request for the connection information to the identified air conditioning unit 13 via the communication unit 31. When the air conditioning unit 13 is powered on, a control unit (not illustrated) of the air conditioning unit 13 generates the connection information indicating that the air conditioning unit 13 is connected, and transmits the connection information to the information processing device 30 via the information conversion device 15 and the network 70. The information processing device 30 receives the connection information by the communication unit 31, and the information acquisition unit 34 acquires the connection information.

When the air conditioning unit 13 is not installed, or when the air conditioning unit 13 is powered off, the acquisition request for the connection information transmitted to the air conditioning unit 13 does not reach. In this case, when there is no signal response from the air conditioning unit 13 in a predetermined period after the transmission of the acquisition request, the information acquisition unit 34 determines that the air conditioning unit 13 is unconnected. Even when there is no signal response from the air conditioning unit 13 in the predetermined period, and it is determined that the air conditioning unit 13 is unconnected, the information acquisition unit 34 considers that the connection information on the air conditioning unit 13 has been acquired.

There is a case where a sensor or the like is connected to the air conditioning unit 13, and communication itself is in operation while the air conditioning function is turned off. In this case, the air conditioning unit 13 is powered on but the air conditioning function is turned off, and thus the air conditioning unit 13 is substantially powered off. Therefore, a dedicated signal may be additionally provided to recognize that the air conditioning unit 13 is powered off when the air conditioning function is turned off even if the air conditioning unit 13 is powered on.

After that, the operation selection unit 35 determines whether the air conditioning unit 13 is connected using the connection information (step S18). When the air conditioning unit 13 is not connected (No in step S18), considering that it has already been determined that the type of climate is the intermediate season and the outside air is in a comfortable condition, the operation selection unit 35 selects the second setting to provide the non-heat exchange operation for the ventilation equipment 11 (step S22). This is because, since the outside air is comfortable, if the air conditioning unit 13 is being used, it is assumed that the non-heat exchange operation will not lead to a large energy loss and will not cause discomfort to the user.

On the other hand, when the air conditioning unit 13 is connected (Yes in step S18), the information acquisition unit 34 acquires the operation type information on the air conditioning unit 13 (step S19). In one example, the information acquisition unit 34 generates an acquisition request for the operation type information and transmits the acquisition request for the operation type information to the air conditioning unit 13 via the communication unit 31. The control unit (not illustrated) of the air conditioning unit 13 generates the operation type information including the heating and cooling operation or the dehumidification operation etc. other than the heating and cooling operation, and transmits the operation type information to the information processing device 30 via the information conversion device 15 and the network 70. In the information processing device 30, the communication unit 31 receives the operation type information, and the information acquisition unit 34 acquires the operating state information. The control unit of the air conditioning unit 13 may include a function to transmit operating state information including at least part of operations performed by the air conditioning controller 14, the energization state of the air conditioning unit 13, and the operating state of the heating and cooling function to the information processing device 30 at predetermined periods or when a predetermined event has occurred. In this case, the processing in steps S17 and S19 may be replaced with reception processing on the information transmitted at the predetermined periods or when the predetermined event has occurred.

After that, the operation selection unit 35 determines whether the air conditioning unit 13 is performing the heating and cooling operation, using the operation type information (step S20). When the air conditioning unit 13 is performing the heating and cooling operation (Yes in step S20), the operation selection unit 35 selects the first setting to provide the heat exchange operation for the ventilation equipment 11 (step S21). The reason why the heating and cooling operation is being performed is because the user feels the necessity of heating or cooling at the temperature that is even in the air conditioning non-recommended temperature range in the intermediate season. This determination process allows ventilation to be performed according to the user's home environment, preference, or bodily sensation.

When the air conditioning unit 13 is not performing the heating and cooling operation (No in step S20), the operation selection unit 35 selects the second setting to provide the non-heat exchange operation for the ventilation equipment 11 (step S22). This is because, since it has already been found that basically, it is the intermediate season and the outside air temperature is comfortable, if the non-heat exchange operation is performed, the indoor temperature environment will not become extremely uncomfortable, and energy loss will not occur.

Even when the type of climate is the intermediate season, and the outside air temperature is in the air conditioning non-recommended temperature range, a personal preference may be different from the air conditioning non-recommended temperature range, or the setting of the intermediate season may be incorrect due to the peculiarities of the region. In this case, if the operation of the ventilation equipment 11 is determined only by the processing to determine whether the type of climate is the intermediate season in step S14 and the processing to determine whether the outside air temperature is in the air conditioning non-recommended temperature range in step S16, some discomfort may be given to the user in the room or energy loss may occur. Therefore, by determining whether or not the air conditioning unit 13 is performing the heating and cooling operation in step S20, even when the preference in temperature environment of the user in the room is different from the air conditioning non-recommended temperature range, or when the setting of the intermediate season is incorrect, it becomes possible to perform setting on the ventilation equipment 11 that takes into account the user's preference in temperature environment or bodily sensation, or the region. That is, the determination processing in step S20 is processing regarded as preliminary verification at the time of erroneous detection determination that takes into account the probability that determination in the information processing device 30 that it is comfortable is incorrect.

As described above, by determining the type of climate, determining whether the outside air temperature is in the air conditioning non-recommended temperature range when the type of climate is the intermediate season, and determining whether the air conditioning unit 13 is connected, a ventilation operation suitable for the home environment of the user in the room can be selected. Furthermore, by determining whether the air conditioning unit 13 is performing the heating and cooling operation, a ventilation operation that matches the actual state of use of the heating and cooling apparatus and matches the user's bodily sensation can be selected. As a result, energy saving can be achieved while further enhancing user comfort.

After step S21 or step S22, the setting unit 36 performs the setting selected by the operation selection unit 35 on the ventilation equipment 11 (step S23). Specifically, the setting unit 36 generates a setting instruction including the first setting or the second setting, and transmits the setting instruction to the ventilation equipment 11 via the communication unit 31. The setting instruction is transmitted to the ventilation equipment 11 via the network 70 and the information conversion device 15. Upon receiving the setting instruction, the control unit 121 of the ventilation equipment 11 controls the operation of at least one of the air supply power unit 122, the air exhaust power unit 123, and the air passage switching unit 125 according to the setting included in the setting instruction. This completes the process.

The flowchart in FIG. 7 illustrates a case where all of the climate type determination information, the outside air temperature information, and the operation information are used as the control determination information. As described above, the information processing device 30 performs processing using the control determination information including at least one of the climate type determination information, the outside air temperature information, and the operation information, to allow ventilation that achieves energy saving while enhancing the comfort of the user in the room, according to the home environment of the user or the actual state of use of the heating and cooling apparatus. Thus, of the three pieces of determination processing: the processing to determine whether the type of climate is the intermediate season in step S14; the processing to determine whether the outside air temperature is in the air conditioning non-recommended temperature range in step S16; and the determination processing using the operation information in steps S18 and S20, only one or a combination of two may be performed.

The order of the determination processing is not limited. Even if the processing to determine whether the type of climate is the intermediate season in step S14 is not performed, when the outside air temperature is extremely low, for example, it can be assumed that a heating apparatus is used. The difference between the indoor and outdoor conditions can be compensated for by determining the operating status of the air conditioning unit 13, to avoid unnecessary energy loss. That is, each of the three pieces of determination processing: the processing to determine whether the type of climate is the intermediate season in step S14; the processing to determine whether the outside air temperature is in the air conditioning non-recommended temperature range in step S16; and the determination processing using the operation information in steps S18 and S20, has the effect of preventing the loss of user comfort and energy loss only by its individual determination. Even if any one of them is lacking, a certain effect is obtained. However, by combining two or more of them, the effect is synergistically increased.

In the above description, the case where the information processing device 30 is provided separately from the ventilation equipment 11 outside the building 2 is illustrated, which is not limiting. As an example, the information processing device 30 may be provided integrally with the ventilation equipment 11 or the air conditioning unit 13. In this case, the control unit 121 of the ventilation equipment 11 or the control unit of the air conditioning unit 13 is configured to include the function of the information processing device 30. With this configuration, the time required for communication of the information processing device 30 with the ventilation equipment 11 and the air conditioning unit 13 is shortened, and immediate control in response to changes in environment can be performed. However, if the ventilation equipment 11 and the air conditioning unit 13, which are apparatuses installed inside the building 2, are made too large, ease of installation etc. may deteriorate. Furthermore, the control unit 121 of the ventilation equipment 11 and the control unit of the air conditioning unit 13 typically have difficulty in sparing resources for information processing, and are not suitable for processing a large amount of data. Therefore, the installation place of the information processing device 30 is determined with the communication environment etc. of the building 2 to which the ventilation control system 1 is applied taken into consideration.

In the above description, a case has been described where the information acquisition unit 34 of the information processing device 30 acquires the outside air temperature information at the installation position of the ventilation equipment 11 from the external environment data provision device 60 connected to the network 70. The outside air temperature information in this case is typically a predicted value. Such outside air temperature information may be acquired from a device other than the external environment data provision device 60. In one example, the ventilation control system 1 may provide an outside air temperature prediction device outside the building 2 in which the ventilation equipment 11 is provided. The outside air temperature prediction device includes a temperature sensor that directly measures the outside air temperature, and a temperature prediction unit that predicts a transition of the temperature after the measurement by the temperature sensor, for example, after some minutes or after some hours. Alternatively, the information processing device 30 may include a function or an application to predict the outside air temperature. In this case, the information processing device 30 acquires the outside air temperature measured by a temperature measurement function provided to the ventilation equipment 11 or the air conditioning unit 13, or a temperature sensor provided separately, and, by using the acquired outside air temperature, predicts the temperature after some minutes or after some hours as the outside air temperature information.

The outside air temperature information acquired from the external environment data provision device 60 is typically a predicted value as described above, but the outside air temperature information may be an actual measured value. In one example, a temperature sensor that can measure the outside air temperature of the building 2 in which the ventilation equipment 11 is provided may be provided, and the result of measurement by the temperature sensor may be transmitted to the information processing device 30 as the outside air temperature information. Alternatively, a directly measured value of the outside air temperature obtained by a temperature sensor installed at the air conditioning unit 13 or the ventilation equipment 11 may be the outside air temperature information. That is, a means for acquiring the outside air temperature information is not limited, and the outside air temperature information may be either a predicted value or an actual measured value that is a directly measured value. When the outside air temperature information is acquired from the temperature sensor, the air conditioning unit 13, or the ventilation equipment 11, it is not necessary to acquire the outside air temperature information from the external environment data provision device 60.

The external environment data in the above-described case includes the outside air temperature information at the installation position of the ventilation equipment 11. However, the external environment data may include, if possible, humidity, PM 2.5, pollen air quality, the speed and direction of outside wind, etc. at the installation position of the ventilation equipment 11. In particular, the humidity and the speed and direction of the outside wind are important because they considerably affect the internal environment in the building 2. The humidity causes moisture in the building 2, causing discomfort to a person in the building 2. A strong outside wind causes a large amount of outside air to flow into the room through gaps in the building 2, increasing the amount of ventilation produced naturally. Thus, the humidity and the speed and direction of the outside wind can affect the operations of the ventilation equipment 11 and the air conditioning unit 13, causing errors in methods of use. In addition, by using the humidity, the PM 2.5, the pollen air quality, or the speed and direction of the outside wind to adjust a balance between the operating states of the air supply power unit 122 and the air exhaust power unit 123 of the ventilation equipment 11, or for processing to optimize the heat exchange efficiency of the heat exchange unit 124, the ventilation equipment 11 can be led to a more optimal operation.

Furthermore, in the above description, the information acquisition unit 34 acquires the current date from the timekeeping unit 33, but may acquire the current date from the operating terminal 50, the external environment data provision device 60, another site on the network 70 (not illustrated), etc.

As described above, the ventilation control system 1 according to the first embodiment causes the ventilation equipment 11 to perform the setting of ventilation selected by the information processing device 30 to achieve energy saving while enhancing the comfort of the user in the room. However, the function of the ventilation equipment 11 used in the ventilation control system 1 according to the first embodiment is not limited to performing only processing according to instructions from the information processing device 30. In one example, in the ventilation equipment 11, a switch or the like may be provided in the control unit 121 to directly determine the operating states or the operating ranges of the air supply power unit 122, the air exhaust power unit 123, and the air passage switching unit 125. The ventilation equipment 11 is assumed to be used in various buildings 2 such as a house, and a plurality of pieces of ventilation equipment 11 may be provided. When the ventilation equipment 11 is constructed in the buildings 2, duct lengths and others are not uniform, and settings for obtaining required amounts of ventilation vary. For this reason, the instruction ranges of the air supply power unit 122, the air exhaust power unit 123, and the air passage switching unit 125 according to conditions in each building 2 may be initially set in advance by the contractor or the user of the ventilation equipment 11. If an instruction using the switch or the like and an instruction from the information processing device 30 conflict, the instructions are executed according to the degrees of priority set in advance in the control unit 121.

Some control units 121 have the capability to assess load statuses of the air supply power unit 122 and the air exhaust power unit 123, and automatically perform an operation to determine their operating ranges to select ranges that take conditions in the buildings 2 into consideration. The control unit 121 having this function can greatly improve usability for the contractor or the user as compared with the case of manually determining the operating ranges, and thus may be used.

Furthermore, in the above description, it has been described that the control unit 121 of the ventilation equipment 11 causes the operating terminal 50 to display the operation information on the ventilation equipment 11. At this time, the display processing unit 54 of the operating terminal 50 may display a screen for selecting the type of control determination information on the display unit 53, and cause the user to select the type of control determination information. In this case, the operating state of the ventilation equipment 11 based on the selected control determination information is displayed on the display unit 53 of the operating terminal 50.

In the first embodiment, the information processing device 30 acquires the control determination information including at least one piece of information selected from the climate type determination information that is information for determining the type of climate at the installation position of the ventilation equipment 11, the outside air temperature information indicating the outside air temperature at the installation position of the ventilation equipment 11, and the operation information indicating the operating state of the heating and cooling apparatus inside the building 2. Then, using the control determination information, the information processing device 30 selects one of the first setting to cause the ventilation equipment 11 to perform ventilation operation by heat exchange ventilation and the second setting to cause the ventilation equipment 11 to perform ventilation operation including non-heat exchange ventilation, and operates the ventilation equipment 11 according to the selected setting. Basically, when heat is exchanged between supply air and exhaust air, overall energy loss can be reduced more. However, when the outside air is felt comfortable, it is more efficient to directly take in the outside air using non-heat exchange ventilation to bring the indoor temperature close to the outside air. That is, in the first embodiment, assuming that the ventilation control system 1 includes the ventilation equipment 11 capable of performing non-heat exchange ventilation, the selection between the heat exchange operation and the non-heat exchange operation is automatically and accurately determined using the control determination information including at least one of the climate type determination information, the outside air temperature information, and the operation information, to set the ventilation equipment 11. This has the effect of being able to maintain the comfort of the user in the room, reducing energy loss while saving the user's load. As described above, in the first embodiment, the determination is made based on the type of climate based on the climate type determination information, or whether or not the value of the outside air temperature information is in the air conditioning non-recommended temperature range, or whether the air conditioning unit 13 in the room is performing the heating and cooling operation. Consequently, even when the user who has returned home from the hot outside in summer temporarily turns on the air conditioner to lower the indoor temperature although the indoor temperature environment is comfortable, or when the user sets the interior of the room a little warmer in the cold winter season, the first setting to perform heat exchange ventilation that does not impair the user's setting is selected, so that the comfort of the user is not impaired, and an unnecessary increase or decrease in the amount of ventilation is prevented, resulting in the prevention of occurrence of an unnecessary energy loss. Furthermore, when the air conditioner is operated even in the intermediate season, the first setting to perform heat exchange ventilation is selected likewise, so that it can be prevented that the user is made to feel discomfort and an unnecessary energy loss is produced.

By intermittently or continuously performing the setting selection process, using the control determination information including all of the climate type determination information, the outside air temperature information, and the operation information, a time zone is extracted in which the probability of using the air conditioning unit 13 while maintaining the indoor environment that does not impair user comfort is low, and the indoor and outside air temperature environments are the same, or the outside air is more comfortable. By performing the non-heat exchange operation in the extracted time zone, the operation of the ventilation equipment 11 that makes the user more comfortable while reducing energy loss can be achieved.

As determination conditions for this operation, how to acquire the climate type determination information, the outside air temperature information, and the operation information is important. In the first embodiment, sources of these pieces of information are defined individually. In particular, in order to identify the type of climate and the outside air temperature information by region, it is necessary to perform corresponding data processing. If the information processing device 30 is contained in a ventilation fan housing, the ventilation equipment 11 is expected to be deteriorated in ease of installation and increased in price. Furthermore, the operation of the air conditioning unit 13 must be grasped. Considering these, it is desirable to configure a system in which the information processing device 30 is separate from the ventilation equipment 11, and the information processing device 30 and the ventilation equipment 11 are connected via the network 70. In this case, the information processing device 30 can be a cloud server or the like. Furthermore, it is desirable that the information processing device 30 be installed in a place different from those of the ventilation equipment 11 to be controlled and the air conditioning unit 13. Consequently, the information processing device 30 is not installed for one ventilation equipment 11, but is installed for a plurality of pieces of ventilation equipment 11, allowing effective use of information processing resources.

The operating terminal 50 is used for operations on the information processing device 30. It is desirable that the operation of the ventilation system 10, particularly the operation of the ventilation equipment 11 can be checked by the operating terminal 50. In particular, it is desirable that the operating terminal 50 can be used outdoors. When the user is out, in order to weaken the ventilation air volume or maintain a temperature controlled by the air conditioning unit 13, it may be preferable to perform operation not according to the control of the ventilation control system 1 described above to further reduce energy loss or maintain comfort. That is, since the ventilation control system 1 of the first embodiment is assumed on the premise that the user is present inside the building 2, it is desirable to individually set operation when the user is absent for a long time. Therefore, it is desirable that the operating terminal 50 be portable and operable from the outside, can check at least the setting and the current operating state of the ventilation equipment 11, and have the capability to set the operation of the ventilation equipment 11 itself.

The operating terminal 50 is desirably designed to be unable to stop the operation particularly in air exhaust. Generally, for houses, 24-hour ventilation and the maintenance of an amount of ventilation of 0.5 times/h are recommended. Even when a person is absent, odor may continue to occur in the toilet etc. due to attached odor etc. If the exhaust of a certain amount of air is not constantly operated, there is a probability of backflow. Therefore, in the ventilation control system 1 according to the first embodiment that plays an auxiliary role in the ventilation system 10 that controls automatic operation, it is desirable that air exhaust cannot be stopped. For this reason, it is desirable that a stoppage of air exhaust be possible only in an emergency at least on the ventilation equipment 11 body side, and be set to be unable to be operated from a terminal such as the operating terminal 50 etc.

In the example of FIG. 7, when the type of climate is not the intermediate season, that is, is summer and winter in step S14, the first setting is selected, which is not limiting. In one example, the information acquisition unit 34 may further acquire, as the control determination information, room temperature information that is inside air temperature information indicating the air temperature inside the building 2, and the operation selection unit 35 may select the second setting when the type of climate is summer, the value of the room temperature information is higher than a preset value, and the value of the outside air temperature information is lower than the value of the room temperature information.

In another example, the information acquisition unit 34 may further acquire the room temperature information as the control determination information, and the operation selection unit 35 may select the second setting when, from the operation information on the air conditioning unit 13, the value of the room temperature information in a cooling operating state is higher than a cooling set temperature, and the value of the outside air temperature information is lower than the value of the room temperature information. In this case, the operation information includes the operating state of the air conditioning unit 13 and the cooling set temperature.

In still another example, the information acquisition unit 34 may further acquire the room temperature information as the control determination information, and the operation selection unit 35 may select the second setting when, from the operation information on the air conditioning unit 13, the value of the room temperature information in a heating operating state is lower than a heating set temperature, and the value of the outside air temperature information is higher than the value of the room temperature information. In this case, the operation information includes the operating state of the air conditioning unit 13 and the heating set temperature.

### Second Embodiment.

In the first embodiment, the case where the heating and cooling apparatus is the air conditioning unit 13 has been described as an example. Other than the air conditioning unit 13, heating and cooling apparatuses include a cool air machine, a kerosene stove, a kerosene fan heater, an electric heater, etc. In cold districts where the air temperature decreases drastically in winter, a kerosene stove, a kerosene fan heater, or the like may be used as a heater instead of the air conditioning unit 13. The ventilation control system 1 of the first embodiment can be applied to a heating and cooling apparatus including a communication function. However, many of the heating and cooling apparatuses described as examples above do not include a communication function. A heating and cooling apparatus without a communication function cannot communicate with the information processing device 30, and thus cannot transmit operation information to the information processing device 30. Consequently, when the ventilation control system 1 that requires determination using whether or not the air conditioning unit 13 is connected and whether or not the air conditioning unit 13 is performing the heating and cooling operation in the first embodiment is applied to the building 2 including a heating and cooling apparatus that does not include a communication function, the user may be made to feel discomfort, and energy loss may be increased. Therefore, the second embodiment describes control of the information processing device 30 when the heating and cooling apparatus is not the air conditioning unit 13, specifically, when a heating and cooling apparatus without a communication function is present in the room.

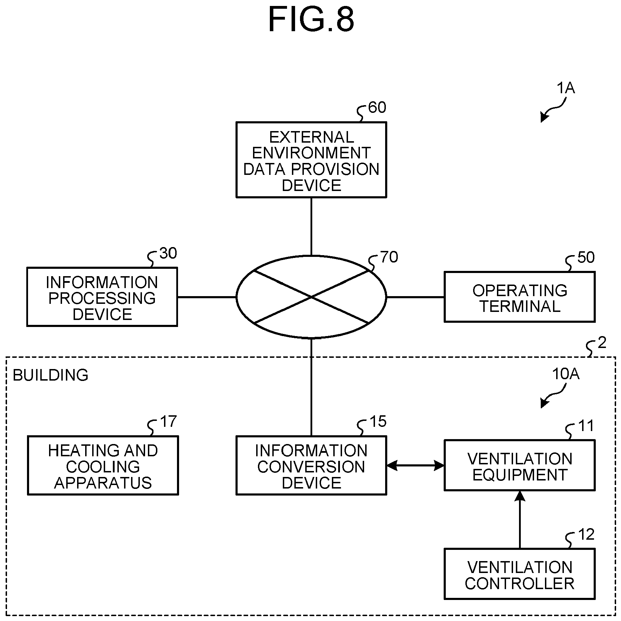

FIG. 8 is a block diagram schematically illustrating an example of a configuration of a ventilation control system according to the second embodiment. The same components as those described in the first embodiment are assigned the same reference numerals and will not be described. A ventilation control system 1A of the second embodiment includes a ventilation system 10A different from the ventilation system 10. The ventilation system 10A does not include the air conditioning unit 13 and includes a heating and cooling apparatus 17 that is not the air conditioning unit 13. The heating and cooling apparatus 17 does not include a communication function. That is, the heating and cooling apparatus 17 cannot communicate with the information processing device 30 via the information conversion device 15.

Since the heating and cooling apparatus 17 does not include a communication function, the information acquisition unit 34 of the information processing device 30 does not include a function to acquire operation information on the heating and cooling apparatus 17. The operation selection unit 35 of the information processing device 30 uses the control determination information including at least one of the climate type determination information and the outside air temperature information to select one of the first setting to cause the ventilation equipment 11 to perform the heat exchange operation and the second setting to cause the ventilation equipment 11 to perform the non-heat exchange operation.

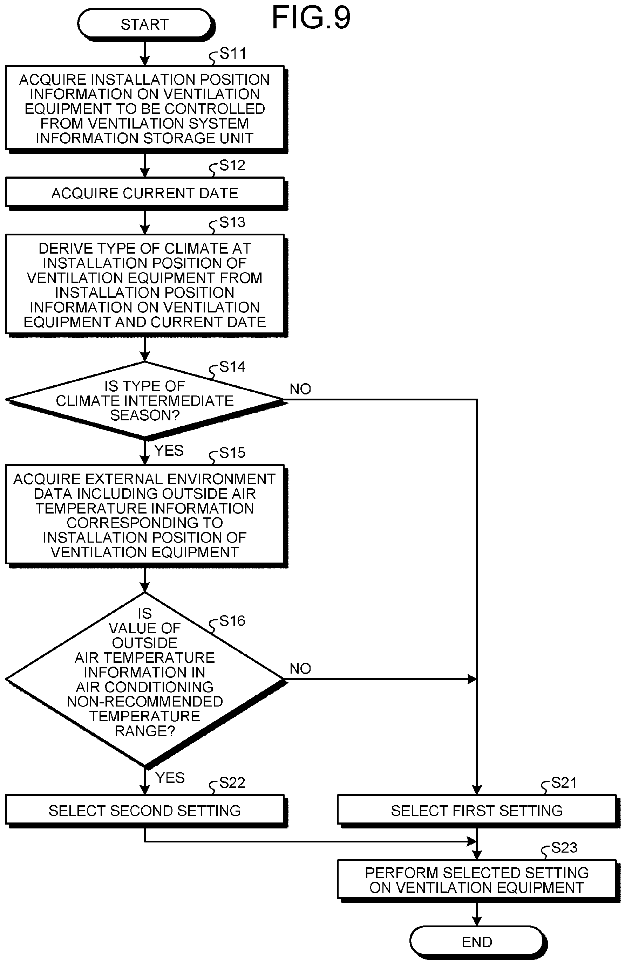

FIG. 9 is a flowchart illustrating an example of a procedure of a ventilation mode switching control method in the ventilation control system according to the second embodiment. The flowchart of FIG. 9 is simplified by omitting the processing from steps S17 to S20 of the flowchart of FIG. 7. That is, since the information processing device 30 cannot obtain operation information from the heating and cooling apparatus 17, the information processing device 30 selects one of the first setting and the second setting, using the climate type determination information and the outside air temperature information, and performs setting on the ventilation equipment 11. The pieces of processing in the flowchart of FIG. 9 have been described in the first embodiment, and will not be described.

The determination processing using the operation information on the air conditioning unit 13 in the first embodiment is unrelated to the external environment data provision device 60, and requires information on another apparatus such as the air conditioning unit 13. In order to enable the operating terminal 50 to operate the ventilation equipment 11 via the information processing device 30 in the ventilation control system 1 of the first embodiment, it is a precondition that the application for operation is installed on the operating terminal 50. The air conditioning unit 13 that operates in conjunction with the ventilation equipment 11 is registered through the application for operation. That is, whether or not the air conditioning unit 13 is connected that indicates whether or not the air conditioning unit 13 is installed is registered. However, the user may feel burdened with the work of the installation of the application for scanning and the registration. However, when the heating and cooling apparatus 17 without a communication function is provided in the room, the air conditioning unit 13 that operates in conjunction is not connected. Consequently, it is easy to select whether or not the air conditioning unit 13 is connected, and the complicatedness of setting is reduced. Furthermore, the determination processing using the operation information on the air conditioning unit 13 in the flowchart of FIG. 7 of the first embodiment is regarded as preliminary verification at the time of erroneous detection determination. Therefore, even if the determination processing in at least one of steps S14 and S16 is performed without acquiring the operation information on the air conditioning unit 13, sufficient effects can be obtained that allow ventilation achieving energy saving while enhancing the comfort of the user in the room as compared to that in the conventional art, and in addition, allow the reduction of the burden of setting work on the information processing device 30 by the user using the operating terminal 50.

In northern districts such as Hokkaido, many households do not possess cooling apparatuses, and use only heating apparatuses. In particular, heating apparatuses are inexpensive, and there are many apparatuses that do not support connection to the network 70. When such a heating apparatus is used, it is, as a result, necessary to adopt the ventilation mode switching control method described in the second embodiment.

In the flowchart of FIG. 7, as described above, of the three pieces of determination processing: the processing to determine whether the type of climate is the intermediate season in step S14; the processing to determine whether the outside air temperature is in the air conditioning non-recommended temperature range in step S16; and the determination processing using the operation information in steps S18 and S20, no one is prioritized. Of the three pieces of determination processing, the determination processing in step S14 or step S16 has the best usability and guaranteed effects when adopted. In particular, following the flowchart illustrated in FIG. 9 in which the determination processing in steps S14 and S16 is adopted allows ventilation that achieves energy saving while enhancing the comfort of the user in the room in accordance with the home environment of the user.

In the second embodiment, assuming that the air conditioning unit 13 is not installed in the room, and the heating and cooling apparatus 17 that cannot perform communication via the network 70 is installed, the information processing device 30 acquires the control determination information including at least one of the climate type determination information that is information for determining the type of climate at the installation position of the ventilation equipment 11 and the outside air temperature information indicating the outside air temperature at the installation position of the ventilation equipment 11. Then, using the control determination information, the information processing device 30 selects one of the first setting to cause the ventilation equipment 11 to perform ventilation operation by heat exchange ventilation and the second setting to cause the ventilation equipment 11 to perform ventilation operation including non-heat exchange ventilation, and operates the ventilation equipment 11 according to the selected setting. This has the effect of allowing ventilation in the room achieving energy saving while enhancing the comfort of the user according to the environment of the region where the ventilation equipment 11 is installed.

### Third Embodiment.

The first and second embodiments have described the operation examples in the case where the outside air temperature information is treated as a current value. A third embodiment describes control of the information processing device 30 in a case where outside air temperature information acquired from the external environment data provision device 60 is treated as a forecast value.

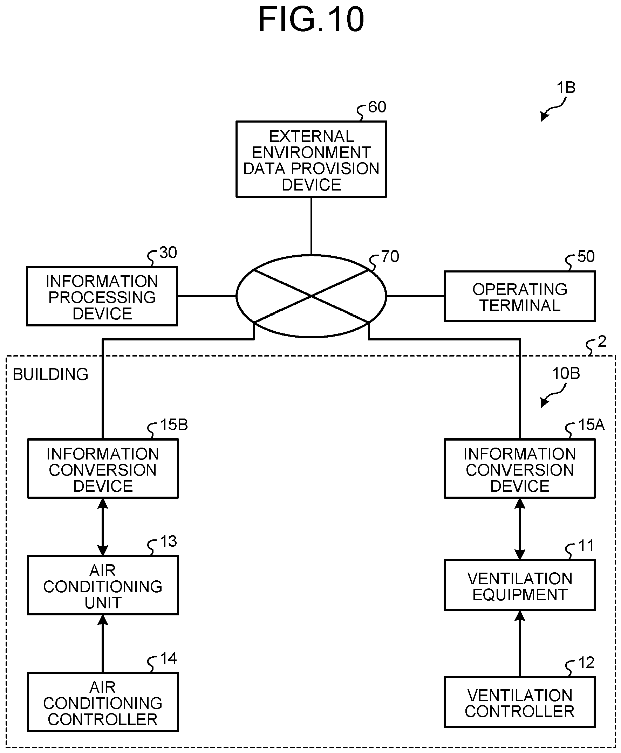

FIG. 10 is a block diagram schematically illustrating an example of a configuration of a ventilation control system according to the third embodiment. The same components as those described in the first embodiment are assigned the same reference numerals and will not be described. A ventilation control system 1B of the third embodiment includes a ventilation system 10B different from the ventilation system 10. The ventilation system 10B includes an information conversion device 15A and an information conversion device 15B instead of the information conversion device 15 of the first embodiment. The information conversion device 15A is a device that performs communication between the ventilation equipment 11 in the ventilation system 10B, and the information processing device 30 and the operating terminal 50 via the network 70. The information conversion device 15B is a device that performs communication between the air conditioning unit 13 in the ventilation system 10B, and the information processing device 30 and the operating terminal 50 via the network 70. The functions of the information conversion devices 15A and 15B are the same as that of the information conversion device 15. Thus, in the third embodiment, the air conditioning unit 13 and the ventilation equipment 11 are connected to the network 70 via the information conversion device 15A and the information conversion device 15B independent from each other, respectively. That is, the ventilation equipment 11 and the air conditioning unit 13 have independent network structures in the building 2, and the respective network structures communicate with the information processing device 30 and the operating terminal 50 via the network 70.

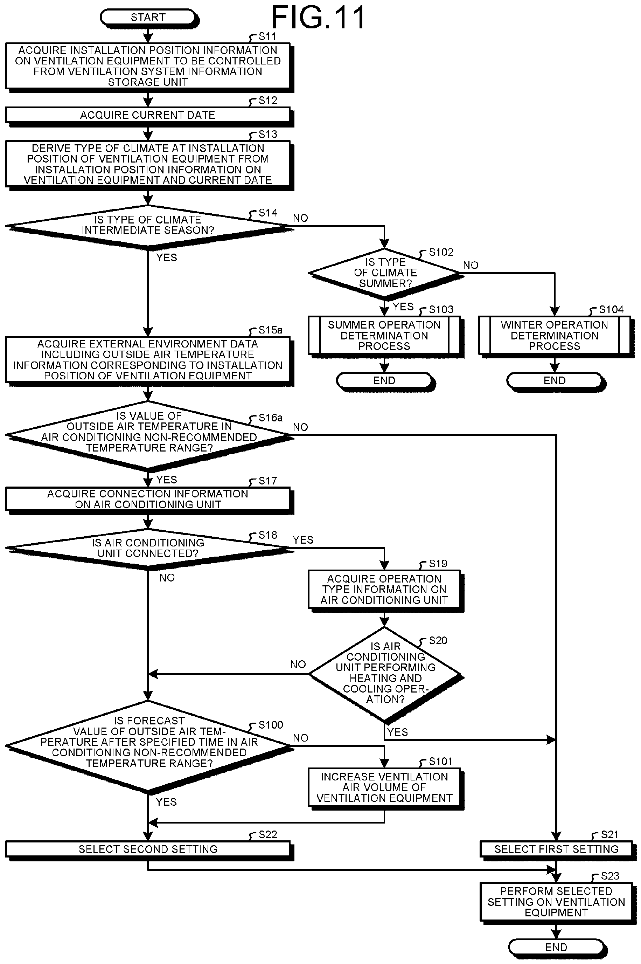

FIG. 11 is a flowchart illustrating an example of a procedure of a ventilation mode switching control method in the ventilation control system according to the third embodiment. FIG. 11 describes a processing procedure in the information processing device 30. Here, it is assumed that the user has registered, using the operating terminal 50, the installation position of the ventilation equipment 11 and the fact that the air conditioning unit 13 is an apparats to be linked, with the information processing device 30, and the installation position of the ventilation system 10B and linked apparatus information have been stored in advance in the ventilation system information storage unit 32. The same pieces of processing as in the flowchart illustrated in FIG. 7 of the first embodiment are assigned the same step numbers and will not be described.

When the derived type of climate is the intermediate season in step S14 (Yes in step S14), the information acquisition unit 34 acquires external environment data corresponding to the installation position of the ventilation equipment 11 from the external environment data provision device 60 via the network 70 (step S15a). The first embodiment has described the example in which the external environment data is the outside air temperature information corresponding to the installation position of the ventilation equipment 11. The external environment data is the outside air temperature information at the installation position of the ventilation equipment 11. The outside air temperature information in the third embodiment includes the value of the outside air temperature at the installation position of the ventilation equipment 11 and the forecast value of the outside air temperature during a specified period that is a given period. The value of the outside air temperature is the latest data held by the external environment data provision device 60 at the point in time when the information acquisition unit 34 acquires the external environment data from the external environment data provision device 60. The value of the outside air temperature can be regarded as the value of the outside air temperature at the present time that is the point in time when the selection of setting for the ventilation equipment 11 is performed.

After that, the operation selection unit 35 determines whether the current value of the outside air temperature included in the acquired external environment data is in the air conditioning non-recommended temperature range (step S16a). When the value of the outside air temperature is not in the air conditioning non-recommended temperature range (No in step S16a), it is considered that the outside air environment, though in the intermediate season, requires heating or cooling. In this case, even if the operation of the air conditioning unit 13 cannot be confirmed, an environment is assumed in which the user uses some air conditioning means, and taking outside air as it is into the building 2 is likely to cause discomfort, and taking in outside air as it is is likely to cause energy loss. Furthermore, if the outside air temperature is comfortable for the user, operating the ventilation equipment 11 for heat exchange ventilation will not give discomfort to the user. Moreover, the intermediate season is a season in which a rapid change to an uncomfortable temperature zone is highly likely to occur, and the switching operation etc. of the ventilation equipment 11 can produce an unnecessary energy loss instead. From the above, when the value of the outside air temperature is not in the air conditioning non-recommended temperature range, the operation selection unit 35 selects the first setting to provide the heat exchange operation for the ventilation equipment 11 (step S21).

On the other hand, when the value of the outside air temperature is in the air conditioning non-recommended temperature range (Yes in step S16a), the information acquisition unit 34 acquires the connection information on the air conditioning unit 13 (step S17).

After that, the operation selection unit 35 determines whether the air conditioning unit 13 is connected using the connection information (step S18). When the air conditioning unit 13 is not connected (No in step S18), the operation selection unit 35 determines whether the forecast value of the outside air temperature after a specified time in the external environment data acquired in step S15a is in the air conditioning non-recommended temperature range (step S100). When the forecast value of the outside air temperature is not in the air conditioning non-recommended temperature range (No in step S100), the operation selection unit 35 determines that energy loss can be reduced by replacing the air in the building 2 in a short time, instructs the ventilation equipment 11 to increase the ventilation air volume (step S101), and further instructs the ventilation equipment 11 to select the second setting to provide the non-heat exchange operation (step S22). In one example, it is essential to replace the air in the building 2 in a short time, but the instruction to increase the ventilation air volume may be selectively set in view of the deterioration of noise.

On the other hand, when the forecast value of the outside air temperature is in the air conditioning non-recommended temperature range (Yes in step S100), the operation selection unit 35 determines that energy loss can be reduced by replacing the air in the building 2 in a normal time, and only instructs the ventilation equipment 11 to select the second setting to provide the non-heat exchange operation (step S22).

On the other hand, when the air conditioning unit 13 is connected (Yes in step S18), the information acquisition unit 34 acquires the operation type information on the air conditioning unit 13 (step S19) as in the first embodiment.

After that, the operation selection unit 35 determines whether the air conditioning unit 13 is performing the heating and cooling operation, using the operation type information (step S20) as in the first embodiment. When the air conditioning unit 13 is performing the heating and cooling operation (Yes in step S20), the operation selection unit 35 selects the first setting to provide the heat exchange operation for the ventilation equipment 11 (step S21).

When the air conditioning unit 13 is not performing the heating and cooling operation (No in step S20), the operation selection unit 35 performs the determination processing using the forecast value in step S100 similarly in the case of No in step S18, because the type of climate is the intermediate season and the outside air temperature is comfortable at the present point in time.

After step S21 or step S22, the setting unit 36 performs the setting selected by the operation selection unit 35 on the ventilation equipment 11 (step S23) similarly to the first embodiment.

On the other hand, when the type of climate derived in step S13 is not the intermediate season (No in step S14), the operation selection unit 35 further determines whether the type of climate is summer (step S102). When the derived type of climate is summer (Yes in step S102), a summer operation determination process is performed (step S103). The summer operation determination process will be described later. After the summer operation determination process is performed, the process is completed.

On the other hand, when the derived type of climate is not summer (No in step S102), a winter operation determination process is performed (step S104). The winter operation determination process will be described later. After the winter operation determination process is performed, the process is completed.

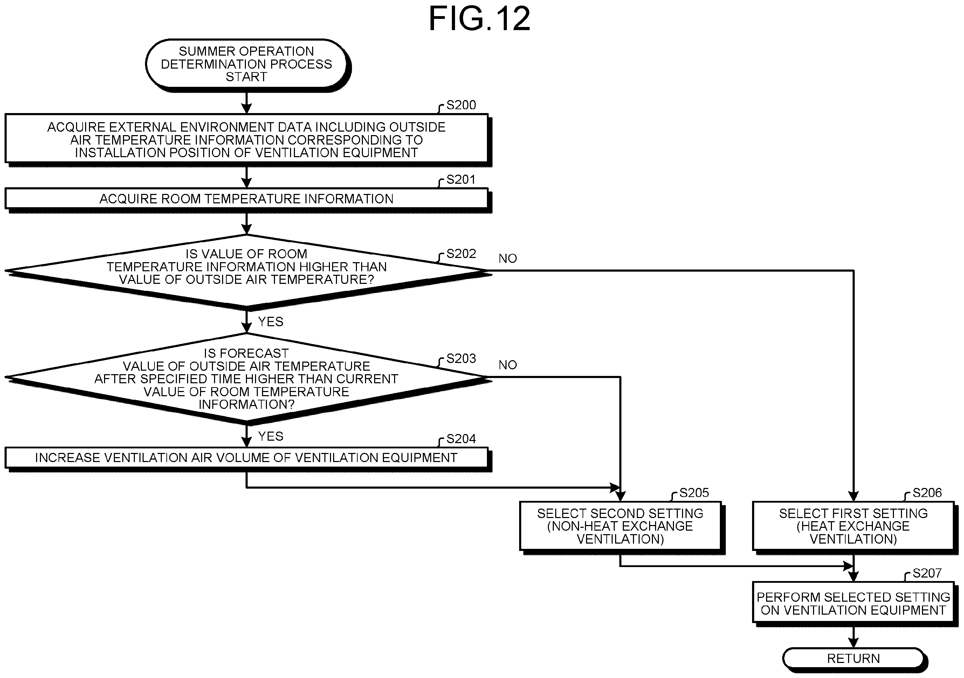

FIG. 12 is a flowchart illustrating an example of a procedure of the summer operation determination process in FIG. 11. FIG. 12 illustrates an example of a procedure of the ventilation mode switching control method in the ventilation control system 1B when the type of climate derived in step S102 of FIG. 11 is summer (when Yes in step S102) .

First, the information acquisition unit 34 of the information processing device 30 acquires external environment data including outside air temperature information corresponding to the installation position of the ventilation equipment 11 acquired in advance from the external environment data provision device 60 via the network 70 (step S200). The outside air temperature information in the external environment data also includes the value of the outside air temperature at the installation position of the ventilation equipment 11 and the forecast value of the outside air temperature during a specified period that is a given period, similarly to step S15a of FIG. 11.

Next, the information acquisition unit 34 of the information processing device 30 acquires room temperature information via the network 70 (step 201). The room temperature information is the indoor temperature in the building 2 in which the ventilation equipment 11 is installed. The room temperature information is desirably the temperature in a room where the ventilation equipment 11 is provided. The room temperature information corresponds to inside air temperature information indicating the air temperature inside the building 2. In the third embodiment, the control determination information includes the inside air temperature information.

After that, the operation selection unit 35 determines whether the value of the acquired room temperature information is higher than the value of the outside air temperature included in the external environment data (step S202). When the value of the room temperature information is equal to or lower than the value of the outside air temperature (No in step S202), it can be determined that the interior of the room is a more comfortable environment than the outside of the building 2 because the type of climate at the time of determination is summer, and the room temperature is equal to or lower than the outside air temperature. Therefore, the operation selection unit 35 selects the first setting to provide the heat exchange operation for the ventilation equipment 11 (step S206) .

On the other hand, when the value of the room temperature information is higher than the value of the outside air temperature (Yes in step S202), it can be determined that the outside of the building 2 is more comfortable than the interior of the room because the type of climate at the time of determination is summer, and the room temperature is higher than the outside air temperature.

In this case, the operation selection unit 35 further determines whether the forecast value of the outside air temperature after a specified time included in the external environment data is higher than the current value of the room temperature information (step S203). In one example, this is the determination of whether the outside air temperature will change due to the rising of the sun or a change in weather from cloudy to sunny, for example, and cooling in the room with the outside air can be performed only for a short time. Here, it is determined whether the forecast value of the outside air temperature after the specified time is higher than the value of the room temperature information. However, it is more desirable to determine whether the forecast value of the outside air temperature until the specified time is higher than the value of the room temperature information. If the forecast value of the outside air temperature after the specified time is higher than the current value of the room temperature information (Yes in step S203), the operation selection unit 35 determines that energy loss can be reduced by replacing the air in the building 2 in a short time, instructs the ventilation equipment 11 to increase the ventilation air volume (step S204), and further instructs the ventilation equipment 11 to select the second setting to provide the non-heat exchange operation (step S205). The increase in ventilation air volume in step S204 may be temporary. In one example, it is essential to replace the air in the building 2 in a short time, but the instruction to increase the ventilation air volume may be selectively set in view of the deterioration of noise. When the forecast value of the outside air temperature after the specified time is higher than the current value of the room temperature information, that is, when it is known from the forecast value that the determination condition of the outside air temperature after the specified time will change, the operation selection unit 35 temporarily increases energy used on the ventilation air volume, to perform operation prioritizing the early improvement of the indoor temperature condition, even allowing an air speed change and noise deterioration. In one example, in summer, even when the outside air temperature is lower than the current room temperature, if it is expected that the outside air temperature will greatly increase as the sun rises or the weather changes from cloudy to sunny, and the outside air temperature will become higher than the current room temperature after a certain period of time, it is assumed that lowering the room temperature quickly even by increasing energy used on the ventilation equipment 11 will result in more energy saving. Therefore, the processing in steps S204 and S205 is executed.

On the other hand, when the forecast value of the outside air temperature after the specified time is equal to or lower than the current value of the room temperature information (No in step S203), the operation selection unit 35 determines that energy loss can be reduced by replacing the air in the building 2 in a normal time. Therefore, the operation selection unit 35 only instructs the ventilation equipment 11 to select the second setting to provide the non-heat exchange operation (step 205). As described above, when the forecast value of the outside air temperature after the specified time is equal to or lower than the current value of the room temperature information, that is, when the determination condition of the outside air does not change in the forecast value of the outside air temperature until a certain time ahead, the operation selection unit 35 prioritizes operation to prevent a large change in air volume. Consequently, energy used on the ventilation air volume is reduced. By preventing a large change in air volume, occurrence of discomfort to the user in the room due to an air speed change and noise deterioration is prevented.

After step S205 or step S206, the setting unit 36 performs the setting selected by the operation selection unit 35 on the ventilation equipment 11 similarly to the case in the intermediate season (step S207). This is the end of the summer operation determination process, and the process returns to FIG. 11.

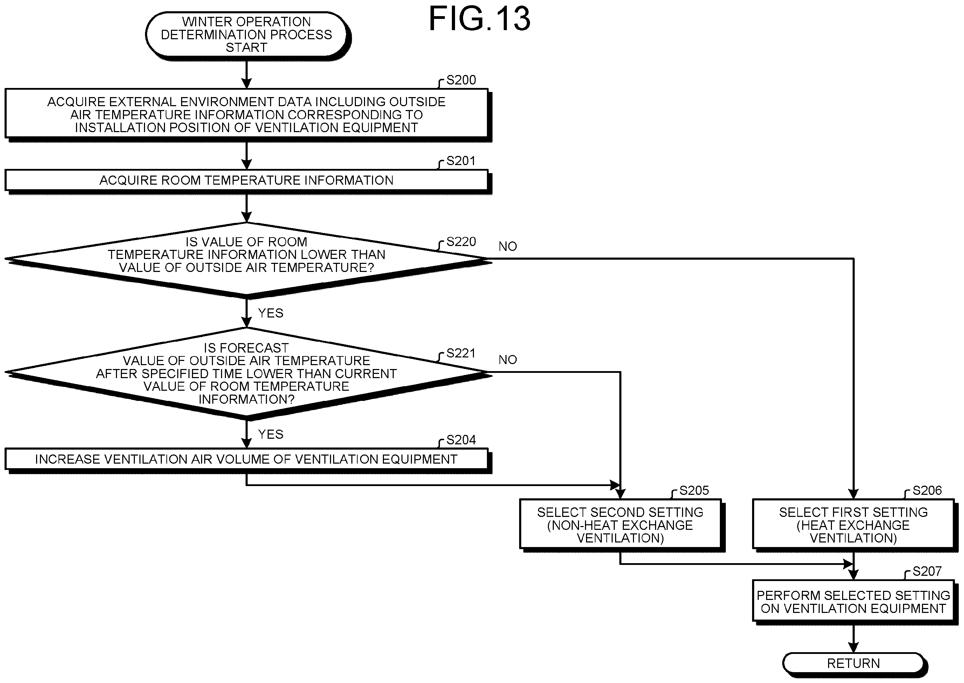

FIG. 13 is a flowchart illustrating an example of a procedure of the winter operation determination process in FIG. 11. FIG. 13 illustrates an example of a procedure of the ventilation mode switching control method in the ventilation control system 1B when the type of climate derived in step S102 of FIG. 11 is winter (when No in step S102). The same pieces of processing as those in FIG. 12 are assigned the same step numbers and will not be described in detail.

Similarly to the case of the summer operation determination process of FIG. 12, the information acquisition unit 34 of the information processing device 30 acquires external environment data and room temperature information (steps S200 and S201). After that, the operation selection unit 35 determines whether the value of the acquired room temperature information is lower than the value of the outside air temperature included in the external environment data (step S220). When the value of the room temperature information is equal to or higher than the value of the outside air temperature (No in step S220), it can be determined that the interior of the room is a more comfortable environment than the outside of the building 2 because the type of climate at the time of determination is winter, and the room temperature is higher than the outside air temperature. Therefore, the operation selection unit 35 selects the first setting to provide the heat exchange operation for the ventilation equipment 11 (step 206).

On the other hand, when the value of the room temperature information is lower than the value of the outside air temperature (Yes in step S220), it can be determined that the outside of the building 2 is more comfortable than the interior of the room because the type of climate at the time of determination is winter, and the room temperature is lower than the outside air temperature.

In this case, the operation selection unit 35 further determines whether the forecast value of the outside air temperature after a specified time included in the external environment data is lower than the current value of the room temperature information (step S221). In one example, this is the determination of whether the outside air temperature will change due to the setting of the sun or a change in weather from sunny to cloudy, for example, and warming in the room with the outside air can be performed only for a short time. Here, it is determined whether the forecast value of the outside air temperature after the specified time is lower than the value of the room temperature information. However, it is more desirable to determine whether the forecast value of the outside air temperature until the specified time is lower than the value of the room temperature information. If the forecast value of the outside air temperature after the specified time is lower than the current value of the room temperature information (Yes in step S221), the operation selection unit 35 determines that energy loss can be reduced by replacing the air in the building 2 in a short time, instructs the ventilation equipment 11 to increase the ventilation air volume (step S204), and further instructs the ventilation equipment 11 to select the second setting to provide the non-heat exchange operation (step S205). The increase in ventilation air volume in step S204 may be temporary. In one example, it is essential to replace the air in the building 2 in a short time, but the instruction to increase the ventilation air volume may be selectively set in view of the deterioration of noise. When the forecast value of the outside air temperature after the specified time is lower than the current value of the room temperature information, that is, when it is known from the forecast value that the determination condition of the outside air temperature after the specified time will change, the operation selection unit 35 temporarily increases energy used on the ventilation air volume, to perform operation prioritizing the early improvement of the indoor temperature condition, even allowing an air speed change and noise deterioration. In one example, in winter, even when the outside air temperature is higher than the current room temperature, if it is expected that the outside air temperature will greatly decrease as the sun sets or the weather changes from sunny to cloudy, and the outside air temperature will become lower than the current room temperature after a certain period of time, it is assumed that raising the room temperature quickly even by increasing energy used on the ventilation equipment 11 will result in more energy saving. Therefore, the processing in steps S204 and S205 is executed.

On the other hand, when the forecast value of the outside air temperature after the specified time is equal to or higher than the current value of the room temperature information (No in step S221), the operation selection unit 35 determines that energy loss can be reduced by replacing the air in the building 2 in a normal time. Therefore, the operation selection unit 35 only instructs the ventilation equipment 11 to select the second setting to provide the non-heat exchange operation (step 205). As described above, when the forecast value of the outside air temperature after the specified time is equal to or higher than the current value of the room temperature information, that is, when the determination condition of the outside air does not change in the forecast value of the outside air temperature until a certain time ahead, the operation selection unit 35 prioritizes operation to prevent a large change in air volume. Consequently, energy used on the ventilation air volume is reduced. By preventing a large change in air volume, occurrence of discomfort to the user in the room due to an air speed change and noise deterioration is prevented.

After step S205 or step S206, the setting unit 36 performs the setting selected by the operation selection unit 35 on the ventilation equipment 11 similarly to the case in the intermediate season (step S207). This is the end of the winter operation determination process, and the process returns to FIG. 11.

In the third embodiment, when the type of climate is not the intermediate season, the information processing device 30 acquires, as the external environment data, the value of the outside air temperature at the installation position of the ventilation equipment 11 at the time of acquisition of the external environment data, and the predicted value of the outside air temperature during a given period. When, in summer, the current forecast value of the outside air temperature is lower than the current value of the room temperature information, but the forecast value of the outside air temperature becomes higher than the current value of the room temperature information within the specified time, or when, in winter, the current forecast value of the outside air temperature is higher than the current value of the room temperature information, but the forecast value of the outside air temperature becomes lower than the current value of the room temperature information within the specified time, the information processing device 30 increases the ventilation air volume of the ventilation equipment 11 and selects the second setting for non-heat exchange ventilation. By thus performing determination using the forecast value of the outside air temperature after the specified time, the air in the building 2 can be replaced in a short time to reduce energy loss and to quickly bring the interior of the building 2 to the environment outside the building 2 comfortable for the user.

When, in summer, the value of the room temperature information is higher than the value of the outside air temperature, and the forecast value of the outside air temperature after the specified time is equal to or lower than the current value of the room temperature information, or when, in winter, the value of the room temperature information is lower than the value of the outside air temperature, and the forecast value of the outside air temperature after the specified time is equal to or higher than the current value of the room temperature information, the information processing device 30 selects the second setting for non-heat exchange ventilation. By thus performing determination using the forecast value of the outside air temperature after the specified time, the air in the building 2 can be replaced in the normal time to reduce energy loss.

Furthermore, by providing the information conversion devices 15A and 15B for the ventilation equipment 11 and the air conditioning unit 13, respectively, the ventilation equipment 11 and the air conditioning unit 13 can transmit and receive information to and from the information processing device 30 or the operating terminal 50 at their respective desired timings. By thus providing the information conversion devices 15A and 15B for the ventilation equipment 11 and the air conditioning unit 13, respectively, delays in transmission and reception of information can be reduced when large numbers of pieces of ventilation equipment 11 and air conditioning units 13 are present in the building 2.

In the above description, the case where the ventilation equipment 11 and the air conditioning unit 13 are configured separately has been described, but the ventilation equipment 11 and the air conditioning unit 13 may be integrated into a ventilator with an air conditioning function. In this case, the ventilator with the air conditioning function includes the function of the air conditioning unit 13 and also includes the function of the ventilation equipment 11.

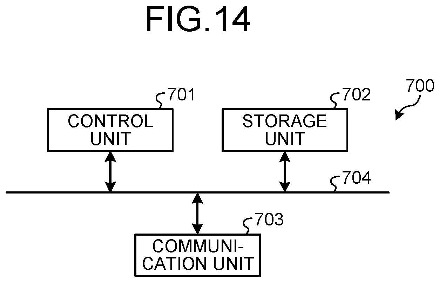

Here, a hardware configuration of the information processing device 30 will be described. The information processing device 30 used in the ventilation control systems 1, 1A, and 1B according to the first to third embodiments is specifically implemented by a computer system. FIG. 14 is a diagram illustrating an example of a hardware configuration of the computer system that implements the information processing device of the ventilation control system according to the first to third embodiments. As illustrated in FIG. 14, a computer system 700 includes a control unit 701, a storage unit 702, and a communication unit 703, which are connected via a system bus 704.

In FIG. 14, the control unit 701 is, for example, a central processing unit (CPU) or the like. The control unit 701 executes a ventilation switching control program in which the ventilation mode switching control method described in the first to third embodiments is described. The storage unit 702 includes various memories such as random-access memory (RAM) and read-only memory (ROM), and a storage device such as a hard disk drive (HDD) or a solid state drive (SSD), and stores the program to be executed by the control unit 701, necessary data obtained in the process of processing, etc. The storage unit 702 is also used as a temporary storage area for the program. The communication unit 703 is a communication circuit or the like that performs communication processing. The communication unit 703 may include a plurality of communication circuits corresponding to a plurality of communication schemes. Note that FIG. 14 is an example, and the configuration of the computer system 700 is not limited to the example of FIG. 14.

Here, an operation example of the computer system 700 until the ventilation switching control program used in the ventilation control systems 1 and 1A according to the first to third embodiments becomes executable will be described. In the computer system 700 having the above-described configuration, the ventilation switching control program is installed in the storage unit 702 from, for example, a compact disc (CD)-ROM or a digital versatile disc (DVD)-ROM set in a CD-ROM drive or a DVD-ROM drive (not illustrated). When the ventilation switching control program is executed, the ventilation switching control program read from the storage unit 702 is stored in an area serving as a main storage device of the storage unit 702. In this state, according to the ventilation switching control program stored in the storage unit 702, the control unit 701 executes processing in the information processing device 30 of the first to third embodiments to select one of the first setting to cause the ventilation equipment 11 to perform ventilation operation by heat exchange ventilation, and the second setting to cause the ventilation equipment 11 to perform ventilation operation including non-heat exchange ventilation, using the control determination information, and operate the ventilation equipment 11 according to the setting.

In the above description, the ventilation switching control program is provided using the CD-ROM or DVD-ROM as a recording medium, which is not limiting. For example, the program provided via a transmission medium such as the Internet through the communication unit 703 may be used, depending on the configuration of the computer system 700, the capacity of the provided program, etc.

The information acquisition unit 34, the operation selection unit 35, and the setting unit 36 of the information processing device 30 illustrated in FIG. 6 are implemented by the control unit 701 in FIG. 14. The ventilation system information storage unit 32 of the information processing device 30 illustrated in FIG. 6 is part of the storage unit 702 illustrated in FIG. 14. The communication unit 31 illustrated in FIG. 6 is implemented by the communication unit 703 illustrated in FIG. 14.

The configurations described in the above embodiments illustrate an example, and can be combined with another known art. The embodiments can be combined with each other. The configurations can be partly omitted or changed without departing from the gist.

### Reference Signs List

1, 1A, 1B ventilation control system; 2 building; 10, 10A, 10B ventilation system; 11 ventilation equipment; 12 ventilation controller; 13 air conditioning unit; 14 air conditioning controller; 15, 15A, 15B information conversion device; 17 heating and cooling apparatus; 30 information processing device; 31, 51 communication unit; 32 ventilation system information storage unit; 33 timekeeping unit; 34 information acquisition unit; 35 operation selection unit; 36 setting unit; 50 operating terminal; 52 operating unit; 53 display unit; 54 display processing unit; 60 external environment data provision device; 70 network; 110 ventilator body; 110a side surface; 111 air intake opening connection; 112 air supply opening connection; 113, 113a, 113b, 113c air return opening connection; 114 air exhaust opening connection; 115, 116 partition member; 117 opening; 121 control unit; 122 air supply power unit; 123 air exhaust power unit; 124 heat exchange unit; 125 air passage switching unit; 126 supply air filter; 151 supply air passage; 152 exhaust air passage; 152a first exhaust air passage; 152b second exhaust air passage.

## Claims

1. A ventilation control system, comprising:
ventilation equipment including a heat exchange unit and capable of switching between a function to perform heat exchange ventilation in which supply air and exhaust air inside a building are passed through the heat exchange unit so that heat is exchanged between the supply air and the exhaust air, and a function to perform non-heat exchange ventilation in which at least part of at least one of the supply air and the exhaust air is not passed through the heat exchange unit, to adjust states of the supply air and the exhaust air individually; and
an information processing device to control operation of the ventilation equipment, wherein
the information processing device includes
an information acquisition unit to acquire control determination information including at least one piece of information selected from climate type determination information that is information for determining a type of climate at an installation position of the ventilation equipment, outside air temperature information indicating an air temperature outside the building, and operation information indicating an operating state of a heating and cooling apparatus capable of performing at least one of heating and cooling inside the building,
an operation selection unit to select, using the control determination information, one of a first setting to operate the ventilation equipment to perform the heat exchange ventilation, and a second setting to operate the ventilation equipment to perform the non-heat exchange ventilation, and
a setting unit to operate the ventilation equipment in accordance with the setting selected by the operation selection unit, and
the ventilation equipment includes
a control unit to adjust the states of the supply air and the exhaust air according to the setting.

2. The ventilation control system according to claim 1, wherein
the first setting is a setting to operate the ventilation equipment so that the supply air and the exhaust air are in a first state, and
the second setting is a setting to operate the ventilation equipment so that the supply air and the exhaust air are in a second state different from the first state.

3. The ventilation control system according to claim 2, wherein the first setting is equal to the second setting in operation for either the supply air or the exhaust air, and the supply air or the exhaust air that is not equally set in the first setting and the second setting is less than the supply air or the exhaust air that is equally set, and the supply air or the exhaust air that is not equally set is less in the second setting than in the first setting.

4. The ventilation control system according to any one of claims 1 to 3, wherein the first setting is set such that a residence time of air in the heat exchange unit is the same between the supply air and the exhaust air.

5. The ventilation control system according to any one of claims 1 to 4, wherein the first setting and the second setting are settings in which operation for the exhaust air is continued.

6. The ventilation control system according to any one of claims 1 to 5, wherein
the operation information includes operation type information indicating an operation type of the heating and cooling apparatus, and
when the information acquisition unit of the information processing device acquires the control determination information including the operation information,
the operation selection unit of the information processing device selects the first setting when the operation information indicates that the heating and cooling apparatus is performing heating and cooling operation.

7. The ventilation control system according to any one of claims 1 to 5, wherein
when the information acquisition unit of the information processing device acquires the control determination information including the outside air temperature information,
the operation selection unit of the information processing device determines whether a value of the outside air temperature information is in a heating and cooling non-recommended temperature range indicating a temperature range in which use of the heating and cooling apparatus is not recommended at the installation position of the ventilation equipment, and selects the first setting when the value of the outside air temperature information is not in the heating and cooling non-recommended temperature range.

8. The ventilation control system according to any one of claims 1 to 5, wherein
when the information acquisition unit of the information processing device acquires the control determination information including the climate type determination information,
the operation selection unit of the information processing device determines, using the climate type determination information, whether the type of climate is a heating and cooling season including summer and winter, and selects the first setting when the type of climate is the heating and cooling season.

9. The ventilation control system according to claim 8, wherein
the climate type determination information includes installation position information indicating the installation position of the ventilation equipment, and a current date, and
the operation selection unit of the information processing device derives the type of climate at the installation position of the ventilation equipment, using latitude and longitude, altitude, and climate corresponding to the installation position information, and the current date.

10. The ventilation control system according to any one of claims 1 to 5, wherein
the operation information includes operation type information indicating an operation type of the heating and cooling apparatus, and
when the information acquisition unit of the information processing device acquires the control determination information including the climate type determination information, the outside air temperature information, and the operation information,
the operation selection unit of the information processing device selects the second setting when the operation selection unit determines that the type of climate is an intermediate season that is not a heating and cooling season including summer and winter, based on the climate type determination information, determines that a value of the outside air temperature information is in a heating and cooling non-recommended temperature range indicating a temperature range in which use of the heating and cooling apparatus is not recommended at the installation position of the ventilation equipment, and determines that the operation information indicates that the heating and cooling apparatus is not performing heating and cooling operation.

11. The ventilation control system according to any one of claims 1 to 5, wherein
the operation information further includes connection information indicating whether or not the heating and cooling apparatus is connected, and
when the information acquisition unit of the information processing device acquires the control determination information including the operation information and at least one of the climate type determination information and the outside air temperature information,
the operation selection unit of the information processing device determines whether or not the heating and cooling apparatus is connected, using the connection information, and, when the operation selection unit determines that the heating and cooling apparatus is not connected, the operation selection unit selects one of the first setting and the second setting, using information other than the operation information in the control determination information.

12. The ventilation control system according to claim 11, wherein
the control determination information includes the operation information, the climate type determination information, and the outside air temperature information, and
the operation selection unit of the information processing device selects the second setting when the operation selection unit that has determined that the heating and cooling apparatus is not connected determines that the type of climate is an intermediate season that is not a heating and cooling season including summer and winter, based on the climate type determination information, and determines that a value of the outside air temperature information is in a heating and cooling non-recommended temperature range indicating a temperature range in which use of the heating and cooling apparatus is not recommended at the installation position of the ventilation equipment.

13. The ventilation control system according to any one of claims 1 to 12, wherein
the information processing device further includes a communication unit,
the ventilation equipment further includes a communication function,
the information processing device and the ventilation equipment are connected via a network,
the information acquisition unit of the information processing device acquires the control determination information via the network, and
the setting unit of the information processing device transmits an instruction including the setting selected to the ventilation equipment via the communication unit.

14. The ventilation control system according to claim 13, further comprising:
an operating terminal connectable to the network and capable of performing an operation on the ventilation equipment,
the operating terminal including
a communication unit to perform communication,
an operating unit to allow input of the installation position of the ventilation equipment and selection of a type of the control determination information,
a display unit, and
a display processing unit to perform processing to display, on the display unit, display information including an operating state of the ventilation equipment received from the ventilation equipment.

15. The ventilation control system according to claim 13 or 14, wherein
the information acquisition unit of the information processing device acquires external environment data including the outside air temperature information on a region from an external environment data provision device which provides the external environment data via the network, and
the outside air temperature information includes a value of the air temperature outside at a time of acquisition by the information acquisition unit, and a forecast value of the air temperature outside during a specified time.

16. The ventilation control system according to any one of claims 1 to 15, wherein
the control determination information further includes inside air temperature information indicating an air temperature inside the building, and
when the information acquisition unit of the information processing device acquires the control determination information including the climate type determination information, the outside air temperature information, and the inside air temperature information,
the operation selection unit of the information processing device selects the second setting when the climate type determination information is summer, a value of the inside air temperature information is higher than a preset value, and a value of the air temperature outside is lower than the value of the inside air temperature information.

17. The ventilation control system according to any one of claims 1 to 15, wherein
the control determination information further includes inside air temperature information indicating an air temperature inside the building,
the operation information includes the operating state and a cooling set temperature of the heating and cooling apparatus, and
when the information acquisition unit of the information processing device acquires the control determination information including the operation information and the inside air temperature information,
the operation selection unit of the information processing device selects the second setting when, from the operation information, a value of the inside air temperature information in a cooling operating state of the heating and cooling apparatus is higher than the cooling set temperature, and a value of the air temperature outside is lower than the value of the inside air temperature information.

18. The ventilation control system according to any one of claims 1 to 15, wherein
the control determination information further includes inside air temperature information indicating an air temperature inside the building,
the operation information includes the operating state and a heating set temperature of the heating and cooling apparatus, and
when the information acquisition unit of the information processing device acquires the control determination information including the operation information and the inside air temperature information,
the operation selection unit of the information processing device selects the second setting when, from the operation information, a value of the inside air temperature information in a heating operating state of the heating and cooling apparatus is lower than the heating set temperature, and a value of the air temperature outside is higher than the value of the inside air temperature information.

19. The ventilation control system according to claim 15, wherein
the control determination information further includes inside air temperature information indicating an air temperature inside the building, and
when the information acquisition unit of the information processing device acquires the control determination information including the outside air temperature information, the climate type determination information, and the inside air temperature information,
the operation selection unit of the information processing device selects the second setting when the climate type determination information is summer, and the forecast value of the air temperature outside after the specified time is lower than a current value of the inside air temperature information.

20. The ventilation control system according to claim 15, wherein
the control determination information further includes inside air temperature information indicating an air temperature inside the building, and
when the information acquisition unit of the information processing device acquires the control determination information including the outside air temperature information, the climate type determination information, and the inside air temperature information,
the operation selection unit of the information processing device selects the second setting and temporarily increases a ventilation air volume of the ventilation equipment when the climate type determination information is summer, a current value of the inside air temperature information is higher than the value of the air temperature outside, and the forecast value of the air temperature outside after the specified time is higher than the current value of the inside air temperature information.

21. The ventilation control system according to claim 15, wherein
the control determination information further includes inside air temperature information indicating an air temperature inside the building, and
when the information acquisition unit of the information processing device acquires the control determination information including the outside air temperature information, the climate type determination information, and the inside air temperature information,
the operation selection unit of the information processing device selects the second setting when the climate type determination information is winter, and the forecast value of the air temperature outside after the specified time is higher than a current value of the inside air temperature information.

22. The ventilation control system according to claim 15, wherein
the control determination information further includes inside air temperature information indicating an air temperature inside the building, and
when the information acquisition unit of the information processing device acquires the control determination information including the outside air temperature information, the climate type determination information, and the inside air temperature information,
the operation selection unit of the information processing device selects the second setting and temporarily increases a ventilation air volume of the ventilation equipment when the climate type determination information is winter, a current value of the inside air temperature information is lower than the value of the air temperature outside, and the forecast value of the air temperature outside after the specified time is lower than the current value of the inside air temperature information.
